# EUROPEAN PATENT APPLICATION

(11) **EP 4 503 807 A1**
(43) Date of publication of application: **05.02.2025**
(21) Application number: 23799260.7
(22) Date of filing: 04.05.2023
(51) Int. Cl.: H04W 72/04

(54) **DATA PROCESSING METHOD AND APPARATUS, AND TERMINAL, NETWORK-SIDE DEVICE AND MEDIUM**

(30) Priority: 05.05.2022 CN 202210483836; 08.08.2022 CN 202210945525
(71) Applicant: Vivo Mobile Communication Co., Ltd., Dongguan, Guangdong 523863 (CN)
(72) Inventor: CHENG, Sihan, Dongguan, Guangdong 523863 (CN); WU, Xiaobo, Dongguan, Guangdong 523863 (CN)
(74) Representative: Murgitroyd & Company
(86) International application number: PCT/CN2023/092081
(87) International publication number: WO 2023/213274

(57) **Abstract**

This application discloses a data processing method and apparatus, a terminal, a network-side device, and a medium. The data processing method in embodiments of this application includes: receiving, by a terminal, first data through a first data channel, where the first data includes data processed by a first network-side device; and processing, by the terminal, the first data based on a first result to obtain final data, where the first result includes a processing load obtained after a first processing load is confirmed or modified by a second network-side device, and the first processing load is an amount of data processing load performed by the terminal or the first network-side device as requested by the terminal.

## Description

### CROSS-REFERENCE TO RELATED APPLICATIONS

This application claims priority to Chinese Patent Application No. 202210483836.6, filed in China on May 5, 2022, and Chinese Patent Application No. 202210945525.7, filed in China on August 8, 2022, both of which are incorporated herein by reference in their entireties.

### TECHNICAL FIELD

This application pertains to the field of communication technologies, and specifically relates to a data processing method and apparatus, a terminal, a network-side device, and a medium.

### BACKGROUND

Usually, two communication parties can make an augmented reality (augmented reality, AR) call through a data channel (data channel, DC). For example, a network-side device establishes an indirect AR channel for the two communication parties, so that the two communication parties can implement the AR call. However, the AR call needs to be rendered, that is, media description information is rendered into a 3D image through a rendering (rendering) process. Because the media description information itself is small, but a rendered file is large, and the rendering requires a large amount of computation, AR call efficiency of a terminal is low.

### SUMMARY

Embodiments of this application provide a data processing method and apparatus, a terminal, a network-side device, and a medium to resolve the problem that AR call efficiency of a terminal in the prior art is low.

According to a first aspect, a data processing method is provided. The method includes: receiving, by a terminal, first data through a first data channel, where the first data includes data processed by a first network-side device; and processing, by the terminal, the first data based on a first result to obtain final data, where the first result includes a processing load obtained after a first processing load is confirmed or modified by a second network-side device, and the first processing load is an amount of data processing load performed by the terminal or the first network-side device as requested by the terminal.

According to a second aspect, a data processing apparatus is provided. The apparatus includes a receiving module and a processing module. The receiving module is configured to receive first data through a first data channel, where the first data includes data processed by a first network-side device. The processing module is configured to process the first data based on a first result to obtain final data, where the first result includes a processing load obtained after a first processing load is confirmed or modified by a second network-side device, and the first processing load is an amount of data processing load performed by a terminal or the first network-side device as requested by the terminal.

According to a third aspect, a data processing method is provided. The method includes: processing, by a first network-side device, data based on a first result to obtain first data; and sending, by the first network-side device, the first data to a terminal, where the first result includes a processing load obtained after a first processing load is confirmed or modified by a second network-side device, and the first processing load is an amount of data processing load performed by the terminal or the first network-side device as requested by the terminal.

According to a fourth aspect, a data processing apparatus is provided. The apparatus includes a processing module and a sending module. The processing module is configured to process data based on a first result to obtain first data. The sending module is configured to send the first data to a terminal, where the first result includes a processing load obtained after a first processing load is confirmed or modified by a second network-side device, and the first processing load is an amount of data processing load performed by the terminal or a first network-side device as requested by the terminal.

According to a fifth aspect, a data processing method is provided. The method includes: sending, by a second network-side device, a first result to a terminal and a first network-side device, where the first result includes a processing load obtained after a first processing load is confirmed or modified by the second network-side device, and the first processing load is an amount of data processing load performed by the terminal or the first network-side device as requested by the terminal.

According to a sixth aspect, a data processing apparatus is provided. The apparatus includes a sending module. The sending module is configured to send a first result to a terminal and a first network-side device, where the first result includes a processing load obtained after a first processing load is confirmed or modified by a second network-side device, and the first processing load is an amount of data processing load performed by the terminal or the first network-side device as requested by the terminal.

According to a seventh aspect, a data processing method is provided. The method includes: sending, by a terminal, a seventh message, where the seventh message is used to request establishment of a second data channel, the seventh message carries fourth information, and the fourth information is used to request or indicate establishment of an indirect data channel or establishment of a data channel in which a network-side device participates; receiving, by the terminal, an eighth message; and establishing, by the terminal, the second data channel based on the eighth message.

According to an eighth aspect, a data processing apparatus is provided. The apparatus includes a sending module, a receiving module, and an establishment module. The sending module is configured to send a seventh message, where the seventh message is used to request establishment of a second data channel, the seventh message carries fourth information, and the fourth information is used to request or indicate establishment of an indirect data channel or establishment of a data channel in which a network-side device participates. The receiving module is configured to receive an eighth message. The establishment module is configured to establish the second data channel based on the eighth message.

According to a ninth aspect, a data processing method is provided. The method includes: receiving, by a first network-side device, second data sent by a terminal, where the second data includes data processed by the terminal; and processing, by the first network-side device, the second data based on a second result to obtain final data, where the second result includes a processing load obtained after a third processing load is confirmed or modified by a second network-side device, and the third processing load is an amount of data processing load performed by the terminal or the first network-side device as requested by the terminal.

According to a tenth aspect, a data processing apparatus is provided. The apparatus includes a receiving module and a processing module. The receiving module is configured to receive second data sent by a terminal, where the second data includes data processed by the terminal. The processing module is configured to process the second data based on a second result to obtain final data, where the second result includes a processing load obtained after a third processing load is confirmed or modified by a second network-side device, and the third processing load is an amount of data processing load performed by the terminal or a first network-side device as requested by the terminal.

According to an eleventh aspect, a data processing method is provided. The method includes: receiving, by a second network-side device, a seventh message sent by a terminal, where the seventh message is used to request establishment of a second data channel, the seventh message carries fourth information, and the fourth information is used to request or indicate establishment of an indirect data channel or establishment of a data channel in which a network-side device participates; and sending, by the second network-side device, an eighth message to the terminal, and establishing the second data channel.

According to a twelfth aspect, a data processing apparatus is provided. The apparatus includes a receiving module, a sending module, and an establishment module. The receiving module is configured to receive a seventh message sent by a terminal, where the seventh message is used to request establishment of a second data channel, the seventh message carries fourth information, and the fourth information is used to request or indicate establishment of an indirect data channel or establishment of a data channel in which a network-side device participates. The sending module is configured to send an eighth message to the terminal. The establishment module is configured to establish the second data channel.

According to a thirteenth aspect, a terminal is provided. The terminal includes a processor and a memory. The memory stores a program or instructions capable of running on the processor. When the program or instructions are executed by the processor, the steps of the method according to the first aspect are implemented.

According to a fourteenth aspect, a terminal is provided and includes a processor and a communication interface. The communication interface is configured to receive first data through a first data channel, where the first data includes data processed by a first network-side device. The processor is configured to process the first data based on a first result to obtain final data, where the first result includes a processing load obtained after a first processing load is confirmed or modified by a second network-side device, and the first processing load is an amount of data processing load performed by the terminal or the first network-side device as requested by the terminal.

According to a fifteenth aspect, a network-side device is provided. The network-side device includes a processor and a memory. The memory stores a program or instructions capable of running on the processor. When the program or instructions are executed by the processor, the steps of the method according to the third aspect are implemented.

According to a sixteenth aspect, a network-side device is provided and includes a processor and a communication interface. The processor is configured to process data based on a first result to obtain first data. The communication interface is configured to send the first data to a terminal, where the first result includes a processing load obtained after a first processing load is confirmed or modified by a second network-side device, and the first processing load is an amount of data processing load performed by the terminal or a first network-side device as requested by the terminal.

According to a seventeenth aspect, a network-side device is provided. The network-side device includes a processor and a memory. The memory stores a program or instructions capable of running on the processor. When the program or instructions are executed by the processor, the steps of the method according to the fifth aspect are implemented.

According to an eighteenth aspect, a network-side device is provided and includes a processor and a communication interface. The communication interface is configured to send a first result to a terminal and a first network-side device, where the first result includes a processing load obtained after a first processing load is confirmed or modified by a second network-side device, and the first processing load is an amount of data processing load performed by the terminal or the first network-side device as requested by the terminal.

According to a nineteenth aspect, a terminal is provided. The terminal includes a processor and a memory. The memory stores a program or instructions capable of running on the processor. When the program or instructions are executed by the processor, the steps of the method according to the seventh aspect are implemented.

According to a twentieth aspect, a terminal is provided and includes a processor and a communication interface. The communication interface is configured to send a seventh message and receive an eighth message, where the seventh message is used to request establishment of a second data channel, the seventh message carries fourth information, and the fourth information is used to request or indicate establishment of an indirect data channel or establishment of a data channel in which a network-side device participates. The processor is configured to establish the second data channel based on the eighth message.

According to a twenty-first aspect, a network-side device is provided. The network-side device includes a processor and a memory. The memory stores a program or instructions capable of running on the processor. When the program or instructions are executed by the processor, the steps of the method according to the ninth aspect are implemented.

According to a twenty-second aspect, a network-side device is provided and includes a processor and a communication interface. The communication interface is configured to receive second data sent by a terminal, where the second data includes data processed by the terminal. The processor is configured to process the second data based on a second result to obtain final data, where the second result includes a processing load obtained after a third processing load is confirmed or modified by a second network-side device, and the third processing load is an amount of data processing load performed by the terminal or a first network-side device as requested by the terminal.

According to a twenty-third aspect, a network-side device is provided. The network-side device includes a processor and a memory. The memory stores a program or instructions capable of running on the processor. When the program or instructions are executed by the processor, the steps of the method according to the eleventh aspect are implemented.

According to a twenty-fourth aspect, a network-side device is provided and includes a processor and a communication interface. The communication interface is configured to receive a seventh message sent by a terminal and send an eighth message to the terminal, where the seventh message is used to request establishment of a second data channel, the seventh message carries fourth information, and the fourth information is used to request or indicate establishment of an indirect data channel or establishment of a data channel in which a network-side device participates. The processor is configured to establish the second data channel.

According to a twenty-fifth aspect, a communication system is provided and includes a terminal and a network-side device. The terminal may be configured to perform the steps of the data processing method according to the first aspect, and the network-side device may be configured to perform the steps of the data processing method according to the third aspect or the fifth aspect; or the terminal may be configured to perform the steps of the data processing method according to the seventh aspect, and the network-side device may be configured to perform the steps of the data processing method according to the ninth aspect or the eleventh aspect.

According to a twenty-sixth aspect, a readable storage medium is provided. The readable storage medium stores a program or instructions. When the program or instructions are executed by a processor, the steps of the method according to the first aspect are implemented, or the steps of the method according to the third aspect are implemented, or the steps of the method according to the fifth aspect are implemented, or the steps of the method according to the seventh aspect are implemented, or the steps of the method according to the ninth aspect are implemented, or the steps of the method according to the eleventh aspect are implemented.

According to a twenty-seventh aspect, a chip is provided. The chip includes a processor and a communication interface. The communication interface is coupled to the processor. The processor is configured to run a program or instructions to implement the method according to the first aspect, or implement the method according to the third aspect, or implement the method according to the fifth aspect, or implement the method according to the seventh aspect, or implement the method according to the ninth aspect, or implement the method according to the eleventh aspect.

According to a twenty-eighth aspect, a computer program or program product is provided. The computer program or program product is stored in a storage medium. The computer program or program product is executed by at least one processor to implement the steps of the data processing method according to the first aspect or implement the steps of the data processing method according to the seventh aspect.

In the embodiments of this application, the terminal may receive the first data (that is, the data processed by the first network-side device) through the first data channel; and the terminal may process the first data based on the first result (that is, the processing load obtained after the processing load requested by the terminal is confirmed or modified by the second network-side device) to obtain the final data. According to this solution, the second network-side device may determine the processing load of the terminal and the processing load of the first network-side device based on the processing load requested by the terminal, and the terminal may reprocess, based on the processing load, the data processed by the first network-side device, that is, the terminal and the first network-side device respectively process a part of the data, thereby avoiding a problem that the terminal needs a large amount of computation for processing the entire data alone or a problem that the network-side device needs to consume a large quantity of network resources for processing the entire data alone, and improving AR call efficiency of the terminal.

### BRIEF DESCRIPTION OF DRAWINGS

FIG. 1 is a schematic diagram of a possible architecture of a communication system according to an embodiment of this application;
FIG. 2 is a first schematic flowchart of a data processing method according to an embodiment of this application;
FIG. 3 is a second schematic flowchart of a data processing method according to an embodiment of this application;
FIG. 4 is a third schematic flowchart of a data processing method according to an embodiment of this application;
FIG. 5 is a fourth schematic flowchart of a data processing method according to an embodiment of this application;
FIG. 6 is a fifth schematic flowchart of a data processing method according to an embodiment of this application;
FIG. 7 is a sixth schematic flowchart of a data processing method according to an embodiment of this application;
FIG. 8 is a first schematic diagram of a structure of a data processing apparatus according to an embodiment of this application;
FIG. 9 is a second schematic diagram of a structure of a data processing apparatus according to an embodiment of this application;
FIG. 10 is a third schematic diagram of a structure of a data processing apparatus according to an embodiment of this application;
FIG. 11 is a fourth schematic diagram of a structure of a data processing apparatus according to an embodiment of this application;
FIG. 12 is a fifth schematic diagram of a structure of a data processing apparatus according to an embodiment of this application;
FIG. 13 is a sixth schematic diagram of a structure of a data processing apparatus according to an embodiment of this application;
FIG. 14 is a schematic diagram of a structure of a communication device according to an embodiment of this application;
FIG. 15 is a schematic diagram of a hardware structure of a terminal according to an embodiment of this application; and
FIG. 16 is a schematic diagram of a structure of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

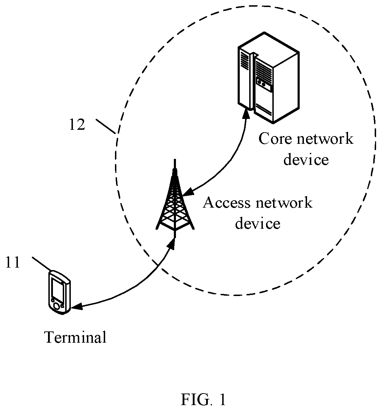

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (VUE), pedestrian user equipment (PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. In addition to the foregoing terminal devices, the terminal may be a chip in a terminal, such as a modem (Modem) chip or a system-on-chip (System on Chip, SoC). It should be noted that a specific type of the terminal 11 is not limited in the embodiments of this application. The network-side device 12 may include an access network device or a core network device. The access network device 12 may also be referred to as a radio access network device, a radio access network (Radio Access Network, RAN), a radio access network function, or a radio access network element. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited. The network-side device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), or the like. It should be noted that in the embodiments of this application, only a core network device in the NR system is used as an example for description, but a specific type of the core network device is not limited.

A data processing method provided in the embodiments of this application is hereinafter described in detail by using some embodiments and application scenarios thereof with reference to the accompanying drawings.

An AR technology is a technology that skillfully integrates virtual information with the real world. The AR technology extensively uses multimedia, three-dimensional modeling, real-time tracking and registration, intelligent interaction, sensing, and other technical means to simulate/emulate and then apply computer-generated virtual information such as a text, an image, a three-dimensional model, music, and a video to the real world. The two types of information complement each other, thereby implementing "augmentation" of the real world.

The 3rd Generation Partnership Project (3rd generation partnership project, 3GPP) protocol introduces a mechanism for establishing a data channel during a call. An additional service, such as AR communication, screen sharing, location sharing, or file transfer, may be performed during the call through the DC, thereby bringing better experience to a user. Different services correspond to different DC applications (application). For ease of use by the user, a DC application may be downloaded dynamically during the call, and does not need to be installed on a terminal in advance. For example, AR communication corresponds to an AR application, and the AR application may be downloaded dynamically during the call.

If two communication parties need to enable an application, the two communication parties should dynamically download the application from a DC server (DC server) and establish a corresponding application DC

(application DC) for the application. Different applications correspond to different quality of service (quality of service, QoS) requirements. For example, the AR application requires a low latency and a high throughput, and a screen sharing application requires good real-time performance. Generally, for each application, an application DC corresponding to the application needs to be established.

An AR call integrates a call technology with the AR technology, thereby bringing better experience to a user. Generally, two communication parties may make an AR call through a DC. For example, a network-side device establishes a direct AR data channel or an indirect AR data channel for the two communication parties, so that the two communication parties can use this data channel to implement the AR call. The direct AR data channel means that the AR call between the two communication parties does not require the network-side device to participate in AR media processing, such as rendering processing. The indirect AR data channel means that the AR call between the two communication parties requires the network-side device to participate in AR media processing, such as rendering processing.

Currently, there are two processing manners for the AR call based on the data channel:
Manner 1: A terminal performs rendering (rendering) locally.
Manner 2: The network-side device performs rendering and sends a rendered file to the terminal for displaying.

The rendering is to render media description information into a 3D image through a rendering process. The media description information itself is small, but the rendered file is large, and the rendering requires a large amount of computation.

An advantage of manner 1 is that an amount of information transmitted by the network-side device is small, and that a requirement on network signal quality is not high. A disadvantage of manner 1 is that a local amount of computation on the terminal is large, and that requirements on terminal performance and battery power are high.

An advantage of manner 2 is that requirements on an amount of computation and battery power of the terminal are low. A disadvantage of manner 2 is that an amount of information transmitted by the network-side device is large, and that a requirement on network signal quality is high.

Neither manner 1 nor manner 2 can properly resolve a problem of the AR call. For example, when power of the terminal is insufficient, it is necessary to reduce the amount of computation of AR and increase a standby time; or when network signal quality of the terminal is poor, computation is performed locally on the terminal as much as possible to improve fluency of the AR call. Therefore, a manner in which the network-side device determines the AR data channel based on a capability of the terminal is not flexible enough, and may not meet requirements of the terminal. As a result, AR call efficiency of the terminal is low.

It should be noted that although AR is used as an example for description in this application, the solution of this application may also be used for applications such as virtual reality (virtual reality, VR) and extended reality (extended reality, XR) that need to be processed separately by the terminal and the network side.

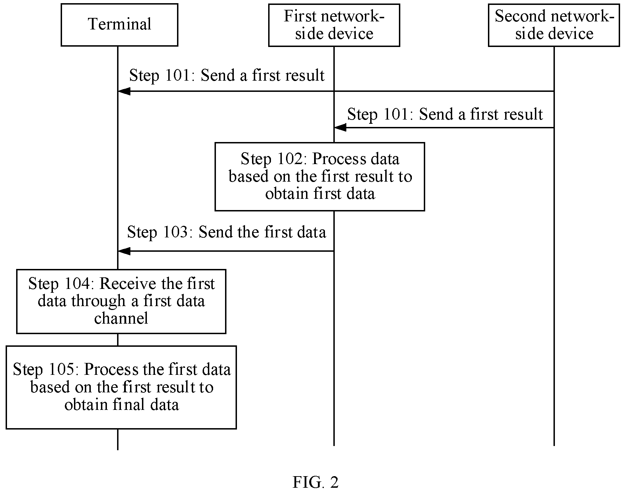

An embodiment of this application provides a data processing method. FIG. 2 is a flowchart of a data processing method according to an embodiment of this application. As shown in FIG. 2, the data processing method provided in this embodiment of this application includes the following steps 101 to 105.

Step 101: A second network-side device sends a first result to a terminal and a first network-side device.

The first result includes a processing load obtained after a first processing load is confirmed or modified by the second network-side device, and the first processing load is an amount of data processing load performed by the terminal or the first network-side device as requested by the terminal.

It should be noted that this application is described by assuming that the first network-side device and the second network-side device are two independent network-side devices. Alternatively, the first network-side device and the second network-side device may be a same network-side device. In this case, interaction between the first network-side device and the second network-side device is internal interaction of the network-side device.

Optionally, in this embodiment of this application, the first network-side device is configured to control a data channel (data channel), and the second network-side device is configured to transmit the data channel. In other words, the first network-side device performs control-related operations, and the second network-side device performs transmission-related operations.

Optionally, in this embodiment of this application, the second network-side device may first send the first result to the terminal, and then send the first result to the first network-side device; or the second network-side device may first send the first result to the first network-side device, and then send the first result to the terminal; or the second network-side device may simultaneously send the first result to the terminal and the first network-side device. This may be specifically determined based on an actual usage requirement, and is not limited in this embodiment of this application.

Step 102: The first network-side device processes data based on the first result to obtain first data.

Step 103: The first network-side device sends the first data to the terminal.

Optionally, in this embodiment of this application, a feasible implementation is: in a case that a first data channel is established between the terminal and the first network-side device, the first network-side device may send the first data, that is, the data processed by the first network-side device, to the terminal through the first data channel, and the terminal may process the first data based on the first result, that is, the processing load obtained after the processing load requested by the terminal is confirmed or modified by the second network-side device, to obtain final data.

Optionally, in this implementation, the first network-side device may be a DC media entity, and the second network-side device may be a DC server. The first network-side device and the second network-side device may also be other network elements with the same function or of the same type, which is not limited in this embodiment of this application.

It may be understood that the first data channel is used for the first network-side device to transmit the data processed by the first network-side device to the terminal, and that the terminal processes the data to obtain the final data.

Optionally, in this embodiment of this application, another feasible implementation is: in a case that a first data channel is established between the terminal and a third network-side device, the third network-side device may send the first data to the terminal through the first data channel, where the first data includes processed by the first network-side device and then sent to the third network-side device. The terminal may process the first data based on the first result, that is, the processing load obtained after the processing load requested by the terminal is confirmed or modified by the second network-side device, to obtain the final data.

Optionally, in this implementation, the first network-side device may be a data processing entity, the second network-side device may be a DC server, and the third network-side device may be a DC media entity. Using AR as an example, the first network-side device is configured to render AR media, and the first network-side device may be AR media (AR media) function. The first network-side device, the second network-side device, and the third network-side device may also be other network elements with the same function or of the same type, which is not limited in this embodiment of this application.

It may be understood that the first data channel is used for the third network-side device to transmit the data processed by the first network-side device to the terminal, and that the terminal processes the data to obtain the final data.

Optionally, in this embodiment of this application, the DC media entity is a network-side device configured to provide a transmission function for the data channel, and may also be referred to as a data channel service media (Data Channel Service Media, DCS-M) plane entity, a data channel media function (Data Channel Media Function, DCMF), a multimedia resource function controller (Multimedia Resource Function Controller, MRFC), a multimedia resource function processor (Multimedia Resource Function Processor, MRFP), or the like. The DC server is a network-side device that provides a control function for the data channel, and may also be referred to as a data channel service control (Data Channel Service Control, DCS-C) plane entity, a data channel server (Data Channel Server, DChS), a data channel control function (Data Channel Control Function, DCCF), a data channel signaling function (Data Channel Signaling Function, DCSF), or the like.

It should be noted that for the description of the first data channel, details are described in the following embodiment and not described herein.

Optionally, in this embodiment of this application, the foregoing processing may be rendering processing, such as distributed rendering, or may be any other possible processing, such as media encoding and decoding, data computation, and data storage. This may be specifically determined based on an actual usage requirement, and is not limited in this embodiment of this application.

Optionally, in this embodiment of this application, the first data includes data obtained after the network-side device renders data based on the first result.

Step 104: The terminal receives the first data through the first data channel.

Step 105: The terminal processes the first data based on the first result to obtain the final data.

Optionally, in this embodiment of this application, the first result may include the processing load obtained after the first processing load is confirmed by the second network-side device, that is, the first result is the first processing load; or the first result includes the processing load obtained after the first processing load is modified by the second network-side device, that is, the first result is the processing load obtained after the first processing load is modified or a second processing load generated based on the first processing load.

Optionally, in this embodiment of this application, the first processing load is the amount of data processing performed by the terminal as requested by the terminal; or the first processing load is the amount of data processing performed by the first network-side device as requested by the terminal.

It should be noted that, because a total data processing load is fixed, a sum of a data processing load of the terminal and a data processing load of the first network-side device is equal to the total processing load. In other words, the data processing load of the first network-side device is also determined once the terminal determines the data processing load of the terminal. Therefore, the data processing load of the terminal and the data processing load of the first network-side device are equivalent and may be derived from each other.

Optionally, in this embodiment of this application, the first processing load may indicate a data processing capability of the terminal.

Optionally, in this embodiment of this application, the first data includes data obtained after the first network-side device renders data based on the first result. The foregoing step 103 may be specifically implemented by the following step 103a.

Step 103a: The terminal renders the first data based on the first result to obtain the final data.

It may be understood that an implementation of this application is: the first network-side device may render the data based on the first result, the first network-side device may send the rendered data to the terminal through the first data channel, and the terminal may render the rendered data again based on the first result to obtain the final data.

It may be understood that another implementation of this application is: the third network-side device receives the data rendered by the first network-side device based on the first result, the third network-side device may send the rendered data to the terminal through the first data channel, and the terminal may render the rendered data again based on the first result to obtain the final data.

It should be noted that the foregoing data processing process may be understood as: the network-side device may determine the data processing load of the terminal and the data processing load of the network-side device separately based on the processing load requested by the terminal. In the data processing process, the network-side device may process a part of the entire data and then the terminal may reprocess the data processed by the network-side device, that is, process another part of the entire data, so that the terminal and the network-side device can respectively process a part of the entire data to obtain the final data.

It should be noted that steps 101 to 105 are described by assuming that the terminal receives data. A case of sending data by the terminal is similar to a case of receiving data by the terminal. The terminal processes the data based on the first result to obtain the first data; the terminal sends the first data to the network-side device through the first data channel; and the network-side device processes the first data based on the first result to obtain the final data. For the case of sending data by the terminal, a method for obtaining the first result is the same as a method for obtaining the first result in the case of receiving data by the terminal. Therefore, the case of sending data by the terminal and the case of receiving data by the terminal are the same, except that initial data processing entities and entities obtaining the final result are different. To simplify the description, it is still assumed in the subsequent description that the terminal receives data. Correspondingly, the case of sending data by the terminal also falls within the protection scope of the present invention. Details are not described again.

In the data processing method provided in this embodiment of this application, the terminal may receive the first data (that is, the data processed by the first network-side device) through the first data channel; and the terminal may process the first data based on the first result (that is, the processing load obtained after the processing load requested by the terminal is confirmed or modified by the second network-side device) to obtain the final data. According to this solution, the second network-side device may determine the processing load of the terminal and the processing load of the first network-side device based on the processing load requested by the terminal, and the terminal may reprocess, based on the processing load, the data processed by the first network-side device, that is, the terminal and the first network-side device respectively process a part of the data, thereby avoiding a problem that the terminal needs a large amount of computation for processing the entire data alone or a problem that the network-side device needs to consume a large quantity of network resources for processing the entire data alone, and improving AR call efficiency of the terminal.

Optionally, in this embodiment of this application, the data processing method provided in this embodiment of this application further includes the following steps 201 to 206.

Step 201: The terminal sends a first message.

In this embodiment of this application, the first message is used to request to modify the data processing load of the terminal or the first network-side device to the first processing load.

Optionally, in this embodiment of this application, before step 103 (the first network-side device sends the first data to the terminal), the terminal may send the first message.

Optionally, in this embodiment of this application, the first message is a session initiation protocol (session initiation protocol, SIP) message, and a session description protocol (session description protocol, SDP) of the SIP message includes the first processing load. Alternatively, the first message is a hypertext transfer protocol (hypertext transfer protocol, HTTP) message, and the HTTP message includes the first processing load.

Optionally, in this embodiment of this application, the terminal may request to modify the data processing load of the terminal to the first processing load; or the terminal may request to modify the data processing load of the first network-side device to the first processing load.

Optionally, in this embodiment of this application, the foregoing step 201 may be specifically implemented by the following step 201a or step 201b.

Step 201a: The terminal sends the first message through the first data channel.

In this embodiment of this application, the first data channel is an application data channel (application DC).

Step 201b: The terminal sends the first message through a bootstrap data channel (bootstrap DC).

It may be understood that the second network-side device receives the first message through the application data channel; or the second network-side device receives the first message through the bootstrap data channel.

For example, the terminal may send the first message to the DC server (DC server) through the bootstrap DC.

Optionally, in this embodiment of this application, the terminal may also send the first message to the DC media entity (DC media function) through the application DC.

Optionally, in this embodiment of this application, in one implementation, the first message includes first status information of the terminal; and the second network-side device determines the first result based on the first status information. In another implementation, the terminal determines the first processing load based on the first status information of the terminal; and the second network-side device determines the first result based on the processing load requested by the terminal.

Optionally, in this embodiment of this application, the data processing method provided in this embodiment of this application further includes the following step 301.

Step 301: The terminal determines the first processing load based on the first status information of the terminal.

The first status information includes at least one of the following: battery usage, network signal information, usage of computing resources, memory usage, temperature information, capability information of the terminal, and terminal model information.

Optionally, in this embodiment of this application, the first status information of the terminal is used to describe a current status of the terminal, which may also be understood as current performance of the terminal.

The battery usage is used to indicate current used or remaining battery power. It may be indicated by a numerical value, a relative value, or a percentage. For example, total power of the terminal is 4000 mAh, 2000 mAh of the power has been used, and the remaining power is 2000 mAh; or 30% of the power has been used, and the remaining power is 70%.

The network signal information is used to indicate quality of a current signal. For a 5G, 4G, or 3G network, the network signal information may be indicated by one or a combination of the following: reference signal received power (reference signal receiving power, RSRP), reference signal received quality (reference signal receiving quality, RSRQ), a received signal strength indicator (received signal strengthen indicator, RSSI), and a SINR (signal to interference and noise ratio, signal to interference plus noise ratio).

The usage of computing resources is used to describe computing resources currently used by the terminal or remaining computing resources of the terminal. It may be indicated by a numerical value, a relative value, or a percentage. For example, the remaining computing resources are 30%.

The memory usage is used to describe memory resources currently used by the terminal or remaining memory resources of the terminal. It may be indicated by a numerical value, a relative value, or a percentage. For example, remaining memory is 30%.

The temperature information is used to describe a current temperature of the terminal. For example, for a terminal with an excessively high temperature, it is necessary to reduce an amount of computation, to reduce the temperature.

The capability information of the terminal includes a computing capability, a storage capability, a service processing capability, and the like. The service processing capability includes a capability of performing a specific service, such as a capability of rendering an AR service.

In a case of a terminal with a low capability, such as a terminal with a low price or a terminal having a processor with poor performance inside the terminal, the terminal cannot process all AR rendering services but requires the help of the network-side device.

The capability information of the terminal may be a simple indication of high, medium, or low; or may be a specific parameter, such as an amount of computation that can be performed per second.

The terminal model information may be grade information of the terminal, such as a high-end terminal, a mid-range terminal, or a low-end terminal; or may be specific product model information of the terminal.

Optionally, in this embodiment of this application, before step 201 (the terminal sends the first message), the terminal may determine the first processing load based on the first status information.

Optionally, in this embodiment of this application, the first processing load includes at least one of the following:
a ratio of data processing by the terminal or the first network-side device; and
task allocation for data processing by the terminal or the first network-side device.

Optionally, in this embodiment of this application, the task allocation for data processing by the terminal or the first network-side device may include a description of the task allocation for data processing by the terminal or the first network-side device, a description of workload allocation for data processing by the terminal or the first network-side device, or the like.

Optionally, in this embodiment of this application, the ratio of data processing by the terminal or the first network-side device may be understood as the ratio of data processing by the terminal and the first network-side device; the task allocation for data processing by the terminal or the first network-side device may be understood as the task allocation for data processing by the terminal and the first network-side device; the description of the task allocation for data processing by the terminal or the first network-side device may be understood as the description of the task allocation for data processing by the terminal and the first network-side device; and the description of workload allocation for data processing by the terminal or the first network-side device may be understood as the description of workload allocation for data processing by the terminal and the first network-side device.

For example, a ratio (percentage) of data processing between the terminal and the first network-side device is: 20%:80%, which may be understood as: the terminal processes 20% of the total workload, and the first network-side device processes 80% of the total workload.

For example, the task allocation for data processing between the terminal and the first network-side device is as follows: Using rendering as an example, the total work includes establishing a spatial map (establish spatial map), rendering scenes (render the scenes), establishing virtual human models, and establishing three-dimensional object models (virtual human models and 3D object models according to the field of view, posture, position). The terminal may indicate that the terminal is responsible for establishing the spatial map and rendering the scenes, and that the first network-side device is responsible for establishing the virtual human models and establishing the three-dimensional object models. The terminal may indicate only its own task, or only a task of the first network-side device, or both its own task and a task of the first network-side device.

For example, the following content is carried in SDP information to carry the task allocation for data processing by the terminal:
m=application 52718 UDP/DTLS/SCTP webrtc-data channel;
b=AS:500;
a=max-message-size:1024;
a=sctp-port:5000;
a=dcmap:10 subprotocol="http";
a=dcmap:7216 max-retr=5; label="low loss";
a=3gpp-qos-hint:loss=0.01; latency=100;
a=UE rendering: 20;
a=UE rendering: spatial map, scenes.

Row m represents that a type of media is a data channel;
row b represents that a bandwidth corresponding to the data channel is 500 kbps;
row a represents attribute information of the data channel;
a=max-message-size:1024 represents that a maximum size of a message that can be transmitted by this data channel is 1024 bytes;
a=sctp-port:5000 represents that a port number corresponding to this data channel is 5000;
a=dcmap:10 subprotocol="http" represents that an application of this data channel is downloaded from a local DC server (a=dcmap:110 subprotocol="http" represents that the application of this data channel is downloaded from a peer DC server); for a decimal stream ID 10 and a decimal stream ID 110 in row a, the stream ID is used to represent a DC; usually, a value of the stream ID from 0 to 999 is used to represent a bootstrap DC, and a value of the stream ID greater than or equal to 1000 is used to represent an application DC;
'a=dcmap:7216 max-retr=5; label="low loss"' represents the application DC, and the stream ID is 7216;
"a=3gpp-qos-hint:loss=0.01; latency=100" is used to describe a start attribute of the application DC, loss represents a packet loss rate, and latency represents a latency, in units of ms;
"a=UE rendering: 20" represents that a ratio of data processing by the terminal is 20%; and
"a=UE rendering: spatial map, scenes" represents that task allocation for data processing by the terminal is: establishing the spatial map and rendering the scenes.

Step 202: The second network-side device receives the first message.

In this embodiment of this application, the first message is used to request to modify the data processing load of the terminal or the first network-side device to the first processing load.

Optionally, in this embodiment of this application, the foregoing step 202 may be specifically implemented by the following step 202a or step 202b.

Step 202a: The second network-side device receives the first message through the application data channel.

Step 202b: The second network-side device receives the first message through the bootstrap data channel.

Optionally, in this embodiment of this application, the terminal may also directly send the first message to the first network-side device through the application data channel, and the first network-side device receives the first message through the application data channel.

Step 203: The second network-side device determines the first result based on the first message.

Step 204: The second network-side device sends a second message.

Optionally, in this embodiment of this application, the second network-side device may determine the first result based on the first message and a current status of the first network-side device, such as a load status of the first network-side device, a quantity of terminals served by the first network-side device, usage of computing resources of the first network-side device, and memory usage of the first network-side device.

Optionally, in this embodiment of this application, the second network-side device may confirm, based on the first message and the current status of the first network-side device, that the data processing load of the terminal or the first network-side device is modified to the first processing load; or the second network-side device may confirm, based on the first message and the current status of the first network-side device, that the data processing load of the terminal or the first network-side device is modified to the second processing load.

Optionally, in this embodiment of this application, the second message is a confirmation message, and the first result is the first processing load; or the second message includes the first result, and the first result is the first processing load or the second processing load determined by the second network-side device.

Optionally, in this embodiment of this application, the second processing load is the processing load obtained after the first processing load is modified by the second network-side device, that is, the processing load modified by the second network-side device.

It may be understood that the second network-side device may determine, based on the first message, whether the first network-side device can meet the request of the terminal, and if the first network-side device can meet the request of the terminal, send the confirmation message or the second message including the first processing load to the terminal, or if the first network-side device cannot meet the request of the terminal, send the second message including the second processing load to the terminal.

Optionally, in this embodiment of this application, the second network-side device may also reject the request of the terminal, and in this case, the terminal and the first network-side device maintain original task allocation.

Optionally, in this embodiment of this application, the data processing method provided in this embodiment of this application further includes the following step 401.

Step 401: The second network-side device determines the second processing load based on second status information of the first network-side device.

The second status information includes at least one of the following: load information of the first network-side device, a quantity of terminals served by the first network-side device, usage of computing resources of the first network-side device, and memory usage of the first network-side device.

Optionally, in this embodiment of this application, before step 204 (the second network-side device sends the second message), the second network-side device may determine the second processing load based on the second status information of the first network-side device.

Optionally, in this embodiment of this application, the second status information of the first network-side device is used to describe the current status of the first network-side device, which may also be understood as current performance of the first network-side device.

The load information of the first network-side device is used to indicate the current load status of the first network-side device. It may be indicated by a numerical value, a relative value, or a percentage. For example, remaining load is 30%.

The quantity of terminals served by the first network-side device is used to indicate a quantity of terminals already served by the first network-side device or a quantity of remaining terminals that can be served. It may be indicated by a numerical value, a relative value, or a percentage. For example, the quantity of remaining terminals that can be served is 30%.

The usage of computing resources of the first network-side device is used to indicate a quantity of computing resources used by the first network-side device or a quantity of remaining available computing resources. It may be indicated by a numerical value, a relative value, or a percentage. For example, the remaining computing resources are 30%.

The memory usage of the first network-side device is used to indicate an amount of memory used by the first network-side device or remaining available memory. It may be indicated by a numerical value, a relative value, or a percentage. For example, the remaining memory is 30%.

Optionally, in this embodiment of this application, the second processing load may indicate a data processing capability of the first network-side device.

Optionally, in this embodiment of this application, the second processing load includes at least one of the following:
a ratio of data processing by the terminal or the first network-side device; and
task allocation for data processing by the terminal or the first network-side device.

Optionally, in this embodiment of this application, the task allocation for data processing by the terminal or the first network-side device may include a description of the task allocation for data processing by the terminal or the first network-side device, a description of workload allocation for data processing by the terminal or the first network-side device, or the like.

Optionally, in this embodiment of this application, the ratio of data processing by the terminal or the first network-side device may be understood as the ratio of data processing by the first network-side device and the terminal; the task allocation for data processing by the terminal or the first network-side device may be understood as the task allocation for data processing by the first network-side device and the terminal; the description of the task allocation for data processing by the terminal or the first network-side device may be understood as the description of the task allocation for data processing by the first network-side device and the terminal; and the description of workload allocation for data processing by the terminal or the first network-side device may be understood as the description of workload allocation for data processing by the first network-side device and the terminal.

It should be noted that for the ratio of data processing by the first network-side device and the task allocation for data processing by the first network-side device, reference may be made to the foregoing descriptions about the ratio of data processing by the terminal and the task allocation for data processing by the terminal. Details are not described herein again.

Step 205: The terminal receives the second message.

Step 206: The terminal determines the first result based on the second message.

Optionally, in this embodiment of this application, the first result is the first processing load or the second processing load.

Optionally, in this embodiment of this application, if the second message is the confirmation message, the first result is the first processing load. Alternatively, the terminal may determine the first result based on the processing load included in the second message.

Optionally, in this embodiment of this application, the first result may indicate whether to agree to the processing load of the terminal or the processing load of the first network-side device.

In this embodiment of this application, because the second network-side device may determine the processing load of the terminal and the processing load of the first network-side device based on the processing load requested by the terminal, the problem that the terminal or the network-side device needs a large amount of computation for processing the entire data alone is avoided, and flexibility of data processing is improved.

Optionally, by using three cases, the following describes a process of establishing the first data channel between the terminal and the first network-side device in this embodiment of this application. In the first case, as a calling device, the terminal may send a request message to the second network-side device to request establishment of an indirect data channel, and in a case that a confirmation message is received, the terminal may establish the indirect data channel with the first network-side device. In the second case, as a called device, the terminal may send a request message to the second network-side device to request establishment of an indirect data channel, and in a case that a confirmation message is received, the terminal may establish the indirect data channel with the first network-side device. In the third case, as a called device, the terminal may send a request message to the second network-side device to request establishment of an indirect data channel in a case that a request for establishing a direct data channel is received, and finally, the terminal may establish the indirect data channel with the first network-side device.

Optionally, in this embodiment of this application, the data processing method provided in this embodiment of this application further includes the following steps 501 to 505.

Step 501: The terminal sends a third message.

In this embodiment of this application, the third message carries first information, and the first information is used to request or indicate establishment of an indirect data channel or establishment of a data channel in which a network-side device participates.

Optionally, in this embodiment of this application, the participation of the network-side device may be understood as participation of the network-side device in data processing, and using rendering as an example, the participation of the network-side device may be understood as participation of the network-side device in rendering processing.

Optionally, in this embodiment of this application, the first information may be a direct indication or an indirect indication. When the first information is the indirect indication, the network-side device autonomously determines, based on the first information, that it is necessary to establish the indirect data channel or the data channel in which the network-side device participates. For example, when the first information is capability information of the terminal, the network-side device determines that a capability of the terminal is low, thereby determining that it is necessary to establish the indirect data channel or introduce the network-side device into the data channel to help the terminal perform rendering processing.

Optionally, in this embodiment of this application, the indirect data channel or the data channel in which the network-side device participates is an application data channel. In other words, the first data channel in this embodiment of this application is an application data channel.

Optionally, in this embodiment of this application, before step 103 (the first network-side device sends the first data to the terminal), the terminal may send the third message.

Optionally, in this embodiment of this application, the third message is a SIP message. SDP information of the SIP message carries the first information; or a message header of the SIP message carries the first information.

Optionally, in this embodiment of this application, the SDP information is used to describe media description information corresponding to the data channel to be established.

Optionally, in this embodiment of this application, the media description information may include data used for AR media rendering (data used for AR media rendering), where the data used for AR media rendering may include user pose information (user pose information), camera information (camera information), and the like. This may be specifically determined based on an actual usage requirement, and is not limited in this embodiment of this application.

For example:
m=application 52718 UDP/DTLS/SCTP webrtc-data channel;
b=AS:500;
a=max-message-size:1024;
a=sctp-port:5000;
a=dcmap:10 subprotocol="http";
a=dcmap:7216 max-retr=5; label="low loss";
a=media path:indirect.
where a=media path:indirect indicates establishment of an indirect data channel.

It should be noted that for descriptions of row m, row b, and row a, reference may be made to the related description of the foregoing step 301. Details are not described herein again.

Optionally, in this embodiment of this application, when the message header of the SIP message carries the first information, the first information is carried by a media feature tag (media feature tag) or a function feature capability (Feature-Caps) of the SIP message.

Optionally, in this embodiment of this application, the third message may be a negotiation request initiated by the terminal for establishing an application DC. Moreover, the third message may further carry QoS description information corresponding to the application DC to be established.

Optionally, in this embodiment of this application, the indirect data channel is a data channel in which the network-side device participates.

Step 502: The second network-side device receives the third message.

Step 503: The second network-side device sends a fourth message.

Optionally, in this embodiment of this application, the fourth message is a confirmation message. Alternatively, the fourth message carries an SDP answer (SDP answer), and the SDP answer is used to establish the indirect data channel.

Optionally, in this embodiment of this application, the fourth message may be a 200 OK message, a 183 message, a 180 message, or the like. This may be specifically determined based on an actual usage requirement, and is not limited in this embodiment of this application.

Step 504: The terminal receives the fourth message.

Step 505: The terminal establishes the first data channel based on the fourth message.

In this embodiment of this application, the terminal may send the third message to the second network-side device to request establishment of the indirect data channel; the second network-side device may reply to the terminal with the fourth message; and the terminal may establish the indirect data channel with the first network-side device based on the fourth message. In this way, the second network-side device may determine, based on the request of the terminal, to establish a direct data channel or an indirect data channel, thereby improving flexibility of establishing a data channel.

Optionally, in this embodiment of this application, the data processing method provided in this embodiment of this application further includes the following steps 601 to 605.

Step 601: The second network-side device sends a fifth message.

In this embodiment of this application, the fifth message is used to request establishment of a data channel.

Optionally, in this embodiment of this application, before step 103 (the first network-side device sends the first data to the terminal), the second network-side device may send the fifth message.

Optionally, in this embodiment of this application, the fifth message is a SIP message.

Step 602: The terminal receives the fifth message.

Step 603: The terminal sends a sixth message.

In this embodiment of this application, the sixth message carries second information, and the second information is used to request or indicate establishment of an indirect data channel or establishment of a data channel in which a network-side device participates.

Optionally, in this embodiment of this application, the sixth message is a SIP message. SDP information of the SIP message carries the second information.

It should be noted that for the description of the sixth message, reference may be made to the related description in the third message. Details are not described herein again.

Step 604: The second network-side device receives the sixth message.

Step 605: The terminal establishes the first data channel.

In this embodiment of this application, after receiving the establishment request, the terminal may send the sixth message to the second network-side device to request establishment of the indirect data channel; the second network-side device may receive the sixth message; and the terminal may establish the indirect data channel with the first network-side device. In this way, the second network-side device may determine, based on the request of the terminal, to establish a direct data channel or an indirect data channel, thereby improving flexibility of establishing a data channel.

Optionally, in this embodiment of this application, the fifth message carries third information, and the third information is used to request or indicate establishment of a direct data channel or establishment of a data channel in which a network-side device does not participate.

Optionally, in this embodiment of this application, the direct data channel is a data channel in which the network-side device does not participate.

It should be noted that in this embodiment of this application, in the process of establishing the data channel, the calling device may actively indicate establishment of a data channel, and the called device may also indicate establishment of a data channel by using a response message.

The data processing method provided in this embodiment of this application is exemplarily described hereinafter by using an example in which a calling device is UE-1, a called device is UE-2, a first network-side device is a DC media function, and a second communication device is DC server-1.

### Example 1:

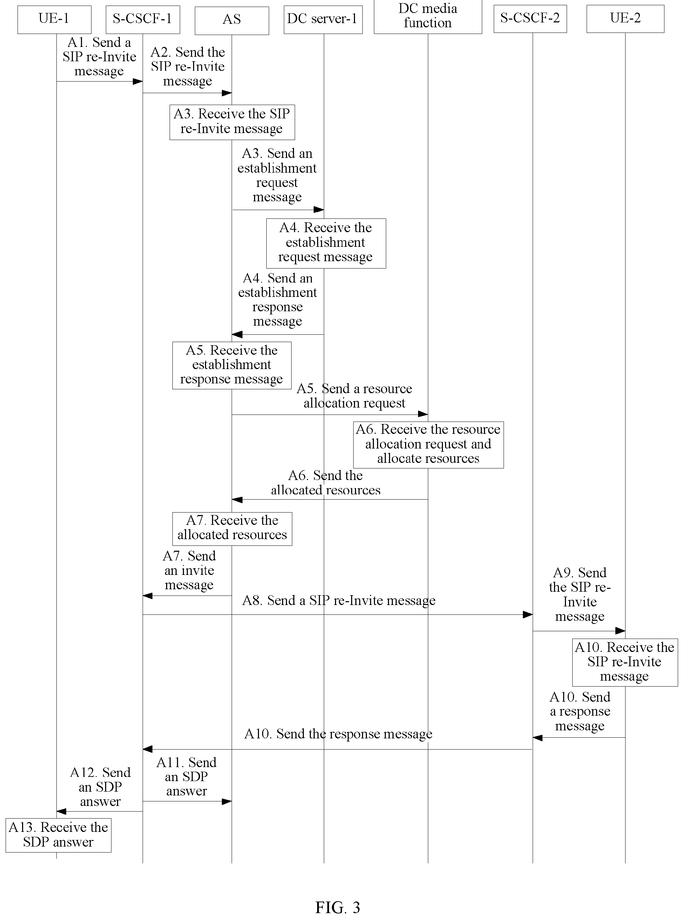

As shown in FIG. 3, a process of establishing a data channel in an embodiment of this application may be specifically implemented by the following steps.

Step A1: User equipment (user equipment, UE)-1 sends a SIP re-Invite message to serving call session control function (sever call session control function, S-CSCF)-1.

The SIP re-Invite message is a negotiation request for establishing an application DC, the SIP re-Invite message carries QoS description information corresponding to the application DC to be established and first indication information, and the first indication information is used to indicate establishment of a DC channel in which a network-side device participates.

Step A2: S-CSCF-1 routes the SIP re-Invite message to an application server (application server, AS).

Step A3: The AS receives the SIP re-Invite message and sends an application DC establishment request message to DC server-1, where the establishment request message carries the first indication information.

Step A4: DC server-1 receives the establishment request message and sends an application DC establishment response message to the AS.

The establishment response message includes a policy for establishing the application DC, for example, establishing the DC through a DC media function. DC server-1 may determine, based on subscription information and capability information (such as whether AR is supported and which functions of AR are supported) of UE-1 and UE-2, and the first indication information of UE-1, whether to establish the DC through the DC media function.

Step A5: The AS receives the establishment response message and sends a DC resource allocation request to the DC media function.

Step A6: The DC media function receives the resource allocation request, allocates resources, and sends the allocated resources to the AS.

Step A7: The AS receives the allocated resources and sends an invite message to S-CSCF-1.

The invite message includes information about the resources allocated by the DC media function.

Step A8: S-CSCF-1 forwards a SIP re-Invite message to S-CSCF-2 based on an address of UE-2.

Step A9: S-CSCF-2 routes the SIP re-Invite message to UE-2.

Step A10: UE-2 receives the SIP re-Invite message and replies with a response message.

The response message carries an SDP answer, and the SDP answer is used to establish the application DC. For example, the response message may be a 200 OK message, a 183 message, or a 180 message.

Step A11: S-CSCF-1 sends an SDP answer to the AS.

Step A12: S-CSCF-1 sends an SDP answer to UE-1.

Step A13: UE-1 receives the SDP answer.

Based on the foregoing steps, UE-1 may establish, with UE-2, the application DC channel in which a network-side device participates.

### Example 2:

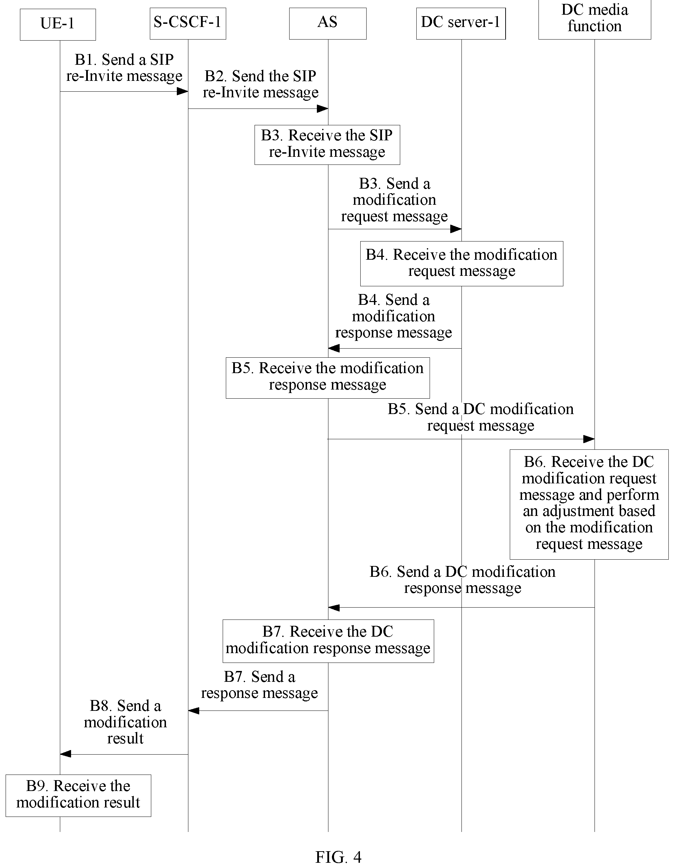

As shown in FIG. 4, a process of determining a first result in an embodiment of this application may be specifically implemented by the following steps.

Step B1: UE-1 sends a SIP re-Invite message to S-CSCF-1.

The SIP re-Invite message is a request for initiating a modification of an application DC, and the SIP re-Invite message carries rendering indication information, where the rendering indication information is used by a network-side device to determine an adjustment result of rendering.

Step B2: S-CSCF-1 routes the SIP re-Invite message to an AS.

Step B3: The AS receives the SIP re-Invite message and sends an application DC modification request message to DC server-1.

The modification request message carries the rendering indication information.

Step B4: DC server-1 receives the modification request message and sends an application DC modification response message to the AS.

The modification response message includes an adjustment result determined by the DC server. Based to a current status (for example, a load status) of a DC media function, DC server-1 determines whether a requirement of UE-1 is met, to determine the adjustment result.

Step B5: The AS receives the modification response message and sends a DC modification request message to the DC media function.

The modification request message carries the adjustment result.

Step B6: The DC media function receives the modification request message, performs an adjustment based on the modification request message, and sends a DC modification response message to the AS.

The modification response message carries adjusted rendering indication information.

Step B7: The AS receives the modification response message and sends a response message to S-CSCF-1.

The response message is used to notify UE-1 of an adjusted result.

Step B8: S-CSCF-1 sends a modification result to UE-1.

Step B9: UE-1 receives the modification result.

The modification result is used to obtain processed final data.

### Example 3:

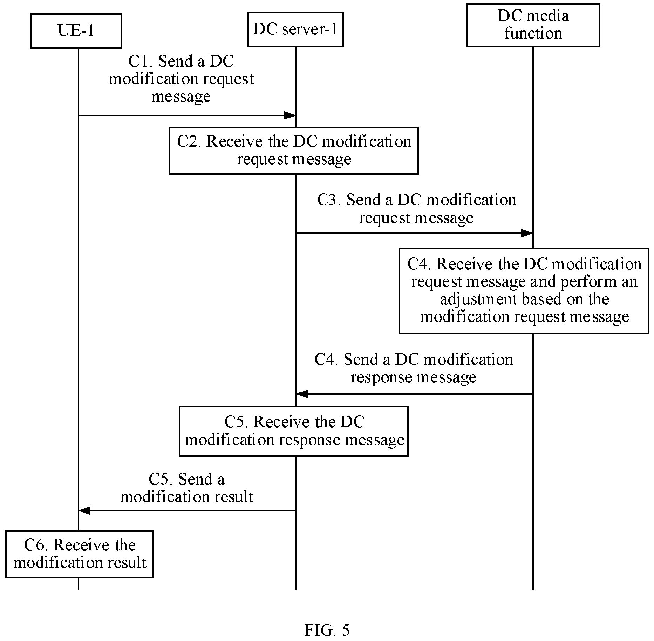

As shown in FIG. 5, a process of determining a first result in an embodiment of this application may be specifically implemented by the following steps.

Step C1: UE-1 sends a DC modification request message to a DC server through a bootstrap DC.

The request message carries rendering indication information, and the rendering indication information is used by a network-side device to determine an adjustment result of rendering.

Step C2: DC server-1 receives the modification request message.

Based to a current status (for example, a load status) of a DC media function, DC server-1 determines whether a requirement of UE-1 is met, to determine the adjustment result.

Step C3: DC server-1 sends a DC modification request message to the DC media function.

Step C4: The DC media function receives the modification request message, performs an adjustment based on the modification request message, and sends a DC modification response message to DC server-1.

The modification response message carries adjusted rendering indication information.

Step C5: DC server-1 receives the modification response message and sends a modification result to UE-1.

Step C6: UE-1 receives the modification result.

The modification result is used to obtain processed final data.

### Example 4:

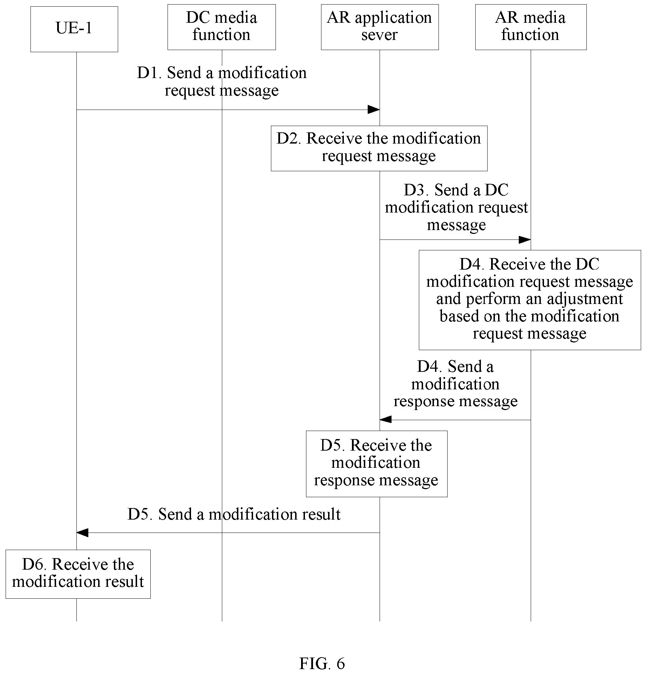

As shown in FIG. 6, a process of determining a first result in an embodiment of this application may be specifically implemented by the following steps.

In FIG. 6, an AR application server is configured to provide an AR service for UE-1, and an AR media function is configured to perform media processing on AR.

Step D1: UE-1 sends a DC modification request message to the AR application server.

The request message carries rendering indication information, and the rendering indication information is used by a network-side device to determine an adjustment result of rendering.

Step D2: The AR application server receives the modification request message.

Based to a current status (for example, a load status) of the AR media function, the AR application server determines whether a requirement of UE-1 is met, to determine the adjustment result.

Step D3: The AR application server sends a DC modification request message to the AR media function.

Step D4: The AR media function receives the modification request message, performs an adjustment based on the modification request message, and sends a modification response message to the AR application server.

The modification response message carries adjusted rendering indication information.

Step D5: The AR application server receives the modification response message and sends a modification result to UE-1.

Step D6: UE-1 receives the modification result.

The modification result is used to obtain processed final data. Subsequently, the AR media function receives the data, renders the data, and then sends the rendered data to the DC media function, and the DC media function sends the rendered data to UE-1 through an application DC.

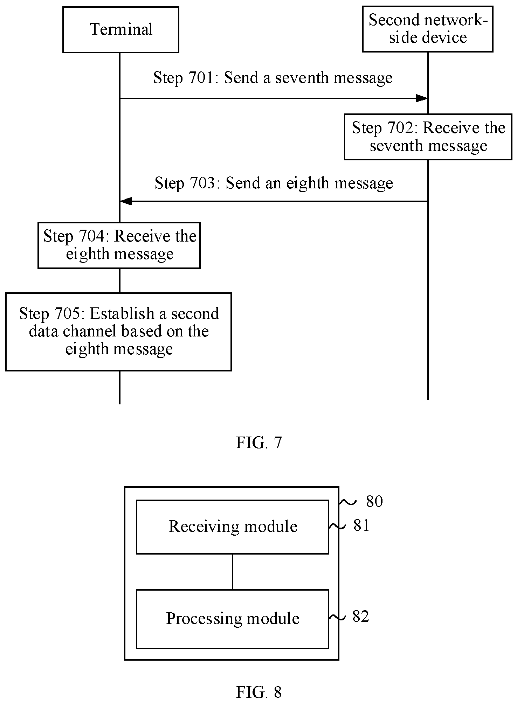

An embodiment of this application further provides a data processing method. FIG. 7 is a flowchart of another data processing method according to an embodiment of this application. As shown in FIG. 7, the data processing method provided in this embodiment of this application includes the following steps 701 to 705.

Step 701: A terminal sends a seventh message.

In this embodiment of this application, the seventh message is used to request establishment of a second data channel, the seventh message carries fourth information, and the fourth information is used to request or indicate establishment of an indirect data channel or establishment of a data channel in which a network-side device participates.

Optionally, in this embodiment of this application, the seventh message is a SIP message;
SDP information of the SIP message carries the fourth information; or
a message header of the SIP message carries the fourth information.

Optionally, in this embodiment of this application, the establishment of a data channel in which a network-side device participates includes:
establishment of a data channel in which a first network-side device participates in rendering processing.

Step 702: A second network-side device receives the seventh message sent by the terminal.

Step 703: The second network-side device sends an eighth message to the terminal.

Step 704: The terminal receives the eighth message.

Step 705: The terminal establishes the second data channel based on the eighth message.

Optionally, in this embodiment of this application, the terminal establishes the second data channel with the first network-side device based on the eighth message.

It should be noted that the seventh message corresponds to the third message in the foregoing embodiment, and the eighth message corresponds to the fourth message in the foregoing embodiment, and the second data channel corresponds to the first data channel in the foregoing embodiment, and the fourth information corresponds to the first information in the foregoing embodiment. For descriptions of the seventh message, the eighth message, the second data channel, the fourth information, the rendering processing, the indirect channel, and the like, reference may be made to the related descriptions of the third message, the fourth message, the first data channel, the first information, the rendering processing, the indirect channel, and the like in the foregoing embodiment. Details are not described herein again.

In the data processing method provided in this embodiment of this application, the terminal may send the seventh message to the second network-side device to request establishment of the indirect data channel or the data channel in which the network-side device participates; the second network-side device may reply to the terminal with the eighth message; and the terminal may establish the indirect data channel with the first network-side device based on the eighth message. According to this solution, the second network-side device may determine establishment of a direct data channel or an indirect data channel based on the request of the terminal, thereby improving flexibility of establishing a data channel, ensuring stability of subsequent data processing, and further improving AR call efficiency of the terminal.

Optionally, in this embodiment of this application, the data processing method provided in this embodiment of this application further includes the following steps 801 and 802 or steps 803 to 805.

Step 801: The terminal receives second data through the second data channel.

In this embodiment of this application, the second data includes data processed by the first network-side device.

Step 802: The terminal processes the second data based on a second result to obtain final data.

Optionally, in this embodiment of this application, the second data includes data obtained after the first network-side device renders data based on the second result. The foregoing step 802 may be specifically implemented by the following step 802a.

Step 802a: The terminal renders the second data based on the second result to obtain the final data.

Step 803: The terminal sends the second data through the second data channel.

In this embodiment of this application, the second data includes data processed by the terminal, and the second data is used for processing by the first network-side device to obtain final data.

Optionally, in this embodiment of this application, the second data includes data obtained after the terminal renders data based on the second result; and the second data is specifically used for rendering processing by the first network-side device to obtain.

Step 804: The first network-side device receives the second data sent by the terminal.

Step 805: The first network-side device processes the second data based on the second result to obtain the final data.

The second result includes a processing load obtained after a third processing load is confirmed or modified by the second network-side device, and the third processing load is an amount of data processing load performed by the terminal or the first network-side device as requested by the terminal.

Optionally, in this embodiment of this application, after obtaining the final data, the first network-side device may send the final data to a peer terminal communicating with the terminal.

For example, in this embodiment of this application, it is assumed that the terminal is UE-1, and that the peer terminal communicating with UE-1 is UE-2. In a communication process, UE-1 may render a part of data and send the rendered data (that is, the second data) to the first network-side device, and the first network-side device may send all the rendered data (that is, the final data) to UE-2 after completing rendering of all the data.

Optionally, in this embodiment of this application, the first network-side device may send the final data in a form of a video stream to the peer terminal communicating with the terminal. Alternatively, the first network-side device may send the final data in other ways to the peer terminal communicating with the terminal. This may be specifically determined based on an actual usage requirement, and is not limited in this embodiment of this application.

Optionally, in this embodiment of this application, after the foregoing step 705 (the terminal establishes the second data channel based on the eighth message), the terminal may send or receive the second data through the second data channel.

Optionally, in this embodiment of this application, the foregoing step 805 may be specifically implemented by the following step 805a.

Step 805a: The first network-side device processes the second data based on the second result to obtain the final data.

It should be noted that the second data corresponds to the first data in the foregoing embodiment, and the second result corresponds to the first result in the foregoing embodiment, and the third processing load corresponds to the first processing load in the foregoing embodiment. For descriptions of the second data, the second result, the third processing load, and the like, reference may be made to the related descriptions of the first data, the first result, the first processing load, and the like in the foregoing embodiment. Details are not described herein again.

Optionally, in this embodiment of this application, the data processing method provided in this embodiment of this application further includes the following step 901.

Step 901: The second network-side device sends the second result to the terminal and the first network-side device.

The second result includes the processing load obtained after the third processing load is confirmed or modified by the second network-side device.

Optionally, in this embodiment of this application, before step 802 (the terminal processes the second data based on the second result to obtain the final data) or step 805 (the first network-side device processes the second data based on the second result to obtain the final data), the second network-side device may send the second result to the terminal and the first network-side device.

Optionally, in this embodiment of this application, the data processing method provided in this embodiment of this application further includes the following steps 1001 to 1003.

Step 1001: The terminal sends a ninth message.

In this embodiment of this application, the ninth message is used to request to modify a data processing load of the terminal or the first network-side device to the third processing load.

Optionally, in this embodiment of this application, the ninth message is a SIP message, and SDP information of the SIP message includes the third processing load; or
the ninth message is an HTTP message, and the HTTP message includes the third processing load.

Optionally, in this embodiment of this application, the foregoing step 1001 may be specifically implemented by the following step 1001a or step 1001b.

Step 1001a: The terminal sends the ninth message through the second data channel.

In this embodiment of this application, the second data channel is an application data channel.

Step 1001b: The terminal sends the ninth message through a bootstrap data channel.

Optionally, in this embodiment of this application, the data processing method provided in this embodiment of this application further includes the following step 1101.

Step 1101: The terminal determines the third processing load based on third status information of the terminal.

The third status information includes at least one of the following: battery usage, network signal information, usage of computing resources, memory usage, temperature information, capability information, and terminal model information.

Optionally, in this embodiment of this application, before step 1001 (the terminal sends the ninth message), the terminal may determine the third processing load based on the third status information of the terminal.

Optionally, in this embodiment of this application, the third processing load includes at least one of the following:
a ratio of data processing by the terminal or the first network-side device; and
task allocation for data processing by the terminal or the first network-side device.

Step 1002: The second network-side device receives the ninth message.

Optionally, in this embodiment of this application, the foregoing step 1002 may be specifically implemented by the following step 1002a or step 1002b.

Step 1002a: The second network-side device receives the ninth message through the application data channel.

Step 1002b: The second network-side device receives the ninth message through the bootstrap data channel.

Step 1003: The second network-side device determines the second result based on the ninth message.

Step 1004: The second network-side device sends a tenth message.

Optionally, in this embodiment of this application, the tenth message is a confirmation message, and the second result is the third processing load; or
the tenth message includes the second result, and the second result is the third processing load or a fourth processing load determined by the second network-side device.

Optionally, in this embodiment of this application, the data processing method provided in this embodiment of this application further includes the following step 1102.

Step 1102: The second network-side device determines the fourth processing load based on fourth status information of the first network-side device.

The fourth status information includes at least one of the following: load information of the first network-side device, a quantity of terminals served by the first network-side device, usage of computing resources of the first network-side device, and memory usage of the first network-side device.

Optionally, in this embodiment of this application, before step 1004 (the second network-side device sends the tenth message), the second network-side device may determine the fourth processing load based on the fourth status information of the first network-side device.

Optionally, in this embodiment of this application, the fourth processing load includes at least one of the following:
a ratio of data processing by the terminal or the first network-side device; and
task allocation for data processing by the terminal or the first network-side device.

Step 1005: The terminal receives the tenth message.

Step 1006: The terminal determines the second result based on the tenth message.

It should be noted that the ninth message corresponds to the first message in the foregoing embodiment, and the tenth message corresponds to the second message in the foregoing embodiment, and the third status information corresponds to the first status information in the foregoing embodiment, and the fourth status information corresponds to the second status information in the foregoing embodiment, and the fourth processing load corresponds to the second processing load. For descriptions of the ninth message, the tenth message, the third status information, the fourth status information, the fourth processing load, and the like, reference may be made to the related descriptions of the first message, the second message, the first status information, the second status information, the second processing load, and the like in the foregoing embodiment. Details are not described herein again.

The data processing method provided in the embodiments of this application may be performed by a data processing apparatus. A data processing apparatus provided in the embodiments of this application is described by assuming that the data processing method is performed by the data processing apparatus in the embodiments of this application.

An embodiment of this application provides a data processing apparatus, applied to a terminal. As shown in FIG. 8, the data processing apparatus 80 includes a receiving module 81 and a processing module 82. The receiving module 81 is configured to receive first data through a first data channel, where the first data includes data processed by a first network-side device. The processing module 82 is configured to process the first data based on a first result to obtain final data. The first result includes a processing load obtained after a first processing load is confirmed or modified by a second network-side device, and the first processing load is an amount of data processing load performed by the terminal or the first network-side device as requested by the terminal.

Optionally, in this embodiment of this application, the apparatus 80 further includes a sending module. The sending module is configured to send a first message, where the first message is used to request to modify a data processing load of the terminal or the first network-side device to the first processing load. The receiving module 81 is further configured to receive a second message. The processing module 82 is further configured to determine the first result based on the second message.

Optionally, in this embodiment of this application, the sending module is specifically configured to send the first message through the first data channel, where the first data channel is an application data channel; or the sending module is specifically configured to send the first message through a bootstrap data channel.

Optionally, in this embodiment of this application, the first message is a SIP message, and SDP information of the SIP message includes the first processing load; or the first message is an HTTP message, and the HTTP message includes the first processing load.

Optionally, in this embodiment of this application, the second message is a confirmation message, and the first result is the first processing load; or the second message includes the first result, and the first result is the first processing load or a second processing load determined by the second network-side device.

Optionally, in this embodiment of this application, the processing module 82 is further configured to determine the first processing load based on first status information of the terminal.

The first status information includes at least one of the following: battery usage, network signal information, usage of computing resources, memory usage, and temperature information.

Optionally, in this embodiment of this application, the first processing load includes at least one of the following:
a ratio of data processing by the terminal or the first network-side device; and
task allocation for data processing by the terminal or the first network-side device.

Optionally, in this embodiment of this application, the first data includes data obtained after the first network-side device renders data based on the first result. The processing module 82 is specifically configured to render the first data based on the first result to obtain the final data.

Optionally, in this embodiment of this application, the apparatus 80 further includes a sending module. The sending module is configured to send a third message, where the third message carries first information, and the first information is used to request or indicate establishment of an indirect data channel or establishment of a data channel in which a network-side device participates. The receiving module 81 is further configured to receive a fourth message. The processing module 82 is configured to establish the first data channel based on the fourth message.

Optionally, in this embodiment of this application, the third message is a SIP message, where SDP information of the SIP message carries the first information.

Optionally, in this embodiment of this application, the apparatus 80 further includes a sending module. The receiving module 81 is further configured to receive a fifth message, where the fifth message is used to request establishment of a data channel. The sending module is configured to send a sixth message, where the sixth message carries second information, and the second information is used to request or indicate establishment of an indirect data channel or establishment of a data channel in which a network-side device participates. The processing module 82 is configured to establish the first data channel.

Optionally, in this embodiment of this application, the fifth message carries third information, and the third information is used to request or indicate establishment of a direct data channel or establishment of a data channel in which a network-side device does not participate.

According to the data processing apparatus provided in this embodiment of this application, because the second network-side device may determine the processing load of the terminal and the processing load of the first network-side device based on the processing load requested by the terminal, the apparatus may reprocess, based on the processing load, the data processed by the first network-side device, that is, the terminal and the first network-side device respectively process a part of the data, thereby avoiding a problem that the terminal needs a large amount of computation for processing the entire data alone or a problem that the network-side device needs to consume a large quantity of network resources for processing the entire data alone, and improving AR call efficiency.

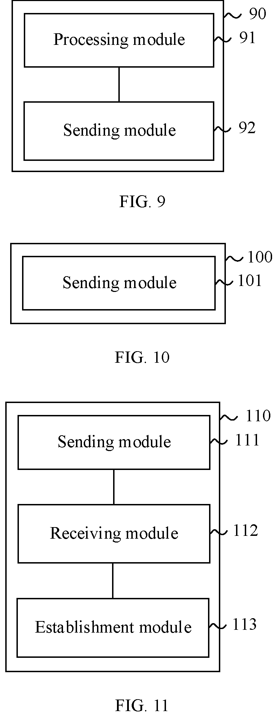

An embodiment of this application provides a data processing apparatus, applied to a network-side device. As shown in FIG. 9, the data processing apparatus 90 includes a processing module 91 and a sending module 92. The processing module 91 is configured to process data based on a first result to obtain first data. The sending module 92 is configured to send the first data to a terminal. The first result includes a processing load obtained after a first processing load is confirmed or modified by a second network-side device, and the first processing load is an amount of data processing load performed by the terminal or a first network-side device as requested by the terminal.

Optionally, in this embodiment of this application, the sending module 92 is specifically configured to render the data based on the first result to obtain the first data.

According to the data processing apparatus provided in this embodiment of this application, because the second network-side device may determine a processing load of the terminal and a processing load of the first network-side device based on the processing load requested by the terminal, the first network-side device and the terminal may respectively process the data based on respective processing loads, that is, the terminal and the first network-side device respectively process a part of the data, thereby avoiding a problem that the terminal needs a large amount of computation for processing the entire data alone or a problem that the network-side device needs to consume a large quantity of network resources for processing the entire data alone, and improving AR call efficiency.

An embodiment of this application provides a data processing apparatus, applied to a network-side device. As shown in FIG. 10, the data processing apparatus 100 includes a sending module 101. The sending module 101 is configured to send a first result to a terminal and a first network-side device. The first result includes a processing load obtained after a first processing load is confirmed or modified by a second network-side device, and the first processing load is an amount of data processing load performed by the terminal or the first network-side device as requested by the terminal.

Optionally, in this embodiment of this application, the apparatus 100 further includes a receiving module and a processing module. The receiving module is configured to receive a first message, where the first message is used to request to modify a data processing load of the terminal or the first network-side device to the first processing load. The processing module is configured to determine the first result based on the first message. The sending module 1001 is further configured to send a second message.

Optionally, in this embodiment of this application, the receiving module is specifically configured to receive the first message through an application data channel; or the receiving module is specifically configured to receive the first message through a bootstrap data channel.

Optionally, in this embodiment of this application, the first message is a SIP message, and SDP information of the SIP message includes the first processing load; or the first message is an HTTP message, and the HTTP message includes the first processing load.

Optionally, in this embodiment of this application, the second message is a confirmation message, and the first result is the first processing load; or the second message includes the first result, and the first result is the first processing load or a second processing load determined by the second network-side device.

Optionally, in this embodiment of this application, the processing module is further configured to determine the second processing load based on second status information of the first network-side device, where
the second status information includes at least one of the following: load information of the first network-side device, a quantity of terminals served by the first network-side device, usage of computing resources of the first network-side device, and memory usage of the first network-side device.

Optionally, in this embodiment of this application, the second processing load includes at least one of the following:
a ratio of data processing by the terminal or the first network-side device; and
task allocation for data processing by the terminal or the first network-side device.

Optionally, in this embodiment of this application, first data includes data obtained after the first network-side device renders data based on the first result.

Optionally, in this embodiment of this application, the apparatus 100 further includes a receiving module. The receiving module is configured to receive a third message, where the third message carries first information, and the first information is used to request or indicate establishment of an indirect data channel or establishment of a data channel in which a network-side device participates. The sending module 101 is further configured to send a fourth message.

Optionally, in this embodiment of this application, the third message is a SIP message, where SDP information of the SIP message carries the first information.

Optionally, in this embodiment of this application, the apparatus 100 further includes a receiving module. The sending module 101 is further configured to send a fifth message, where the fifth message is used to request establishment of a data channel. The receiving module is configured to receive a sixth message, where the sixth message carries second information, and the second information is used to request or indicate establishment of an indirect data channel or establishment of a data channel in which a network-side device participates.

Optionally, in this embodiment of this application, the fifth message carries third information, and the third information is used to request or indicate establishment of a direct data channel or establishment of a data channel in which a network-side device does not participate.

According to the data processing apparatus provided in this embodiment of this application, the processing load of the terminal and the processing load of the network-side device may be determined respectively based on the processing load requested by the terminal. Therefore, the terminal and the first network-side device may respectively process the data based on respective processing loads, that is, the terminal and the network-side device respectively process a part of the data, thereby avoiding a problem that the terminal needs a large amount of computation for processing the entire data alone or a problem that the network-side device needs to consume a large quantity of network resources for processing the entire data alone, and improving AR call efficiency.

An embodiment of this application provides a data processing apparatus, applied to a terminal. As shown in FIG. 11, the data processing apparatus 110 includes a sending module 111, a receiving module 112, and an establishment module 113. The sending module 111 is configured to send a seventh message, where the seventh message is used to request establishment of a second data channel, the seventh message carries fourth information, and the fourth information is used to request or indicate establishment of an indirect data channel or establishment of a data channel in which a network-side device participates. The receiving module 112 is configured to receive an eighth message. The establishment module 113 is configured to establish the second data channel based on the eighth message.

Optionally, in this embodiment of this application, the seventh message is a SIP message, where SDP information of the SIP message carries the fourth information; or a message header of the SIP message carries the fourth information.

Optionally, in this embodiment of this application, the establishment of a data channel in which a network-side device participates includes: establishment of a data channel in which a first network-side device participates in rendering processing.

Optionally, in this embodiment of this application, the apparatus 110 further includes a processing module. The receiving module 112 is further configured to receive second data through the second data channel, where the second data includes data processed by a first network-side device; and the processing module is configured to process the second data based on a second result to obtain final data; or
the sending module 111 is further configured to send second data through the second data channel, where the second data includes data processed by the terminal, and the second data is used for processing by a first network-side device to obtain final data.

Optionally, in this embodiment of this application, the second result includes a processing load obtained after a third processing load is confirmed or modified by a second network-side device, and the third processing load is an amount of data processing load performed by the terminal or the first network-side device as requested by the terminal.

Optionally, in this embodiment of this application, the apparatus 110 further includes a determining module. The sending module 111 is further configured to send a ninth message, where the ninth message is used to request to modify a data processing load of the terminal or the first network-side device to the third processing load. The receiving module 112 is further configured to receive a tenth message. The determining module is configured to determine the second result based on the tenth message.

Optionally, in this embodiment of this application, the sending module 111 is specifically configured to send the ninth message through the second data channel, where the second data channel is an application data channel; or the sending module 111 is specifically configured to send the ninth message through a bootstrap data channel.

Optionally, in this embodiment of this application, the ninth message is a SIP message, and SDP information of the SIP message includes the third processing load; or the ninth message is an HTTP message, and the HTTP message includes the third processing load.

Optionally, in this embodiment of this application, the tenth message is a confirmation message, and the second result is the third processing load; or the tenth message includes the second result, and the second result is the third processing load or a fourth processing load determined by the second network-side device.

Optionally, in this embodiment of this application, the apparatus 110 further includes a determining module. The determining module is configured to determine the third processing load based on third status information of the terminal, where
the third status information includes at least one of the following: battery usage, network signal information, usage of computing resources, memory usage, temperature information, capability information, and terminal model information.

Optionally, in this embodiment of this application, the third processing load includes at least one of the following:
a ratio of data processing by the terminal or the first network-side device; and
task allocation for data processing by the terminal or the first network-side device.

Optionally, in this embodiment of this application, the second data includes data obtained after the first network-side device renders data based on the second result. The processing module 113 is specifically configured to render the second data based on the second result to obtain the final data.

Optionally, in this embodiment of this application, the second data includes data obtained after the terminal renders data based on the second result; and the second data is specifically used for rendering processing by the first network-side device to obtain.

According to the data processing apparatus provided in this embodiment of this application, establishment of a direct data channel or an indirect data channel may be determined based on the request of the terminal, thereby improving flexibility of establishing a data channel, ensuring stability of subsequent data processing, and further improving AR call efficiency.

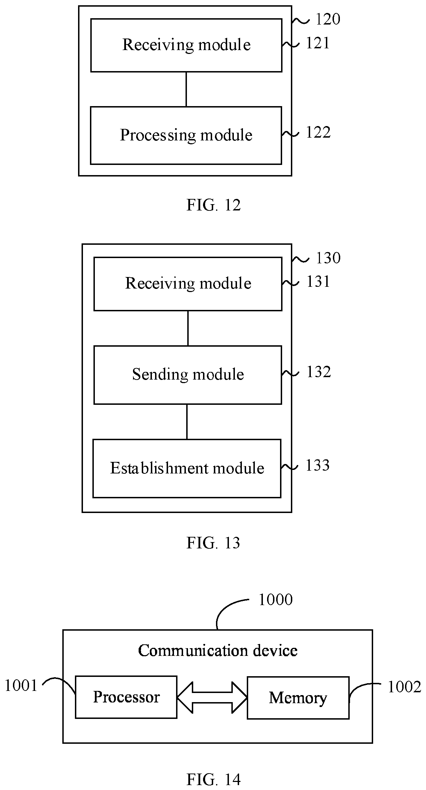

An embodiment of this application provides a data processing apparatus, applied to a network-side device. As shown in FIG. 12, the data processing apparatus 120 includes a receiving module 121 and a processing module 122. The receiving module 121 is configured to receive second data sent by a terminal, where the second data includes data processed by the terminal. The processing module 122 is configured to process the second data based on a second result to obtain final data, where the second result includes a processing load obtained after a third processing load is confirmed or modified by a second network-side device, and the third processing load is an amount of data processing load performed by the terminal or a first network-side device as requested by the terminal.

Optionally, in this embodiment of this application, the processing module 122 is specifically configured to render the second data based on the second result to obtain the final data.

According to the data processing apparatus provided in this embodiment of this application, establishment of a direct data channel or an indirect data channel may be determined based on the request of the terminal, thereby improving flexibility of establishing a data channel, ensuring stability of subsequent data processing, and further improving AR call efficiency.

An embodiment of this application provides a data processing apparatus, applied to a network-side device. As shown in FIG. 13, the data processing apparatus 130 includes a receiving module 131, a sending module 132, and an establishment module 133. The receiving module 131 is configured to receive a seventh message sent by a terminal, where the seventh message is used to request establishment of a second data channel, the seventh message carries fourth information, and the fourth information is used to request or indicate establishment of an indirect data channel or establishment of a data channel in which a network-side device participates. The sending module 132 is configured to send an eighth message to the terminal. The establishment module 133 is configured to establish the second data channel.

Optionally, in this embodiment of this application, the seventh message is a SIP message, where SDP information of the SIP message carries the fourth information; or a message header of the SIP message carries the fourth information.

Optionally, in this embodiment of this application, the establishment of a data channel in which a network-side device participates includes: establishment of a data channel in which a first network-side device participates in rendering processing.

Optionally, in this embodiment of this application, the sending module 132 is further configured to send a second result to the terminal and a first network-side device, where
the second result includes a processing load obtained after a third processing load is confirmed or modified by a second network-side device, and the third processing load is an amount of data processing load performed by the terminal or the first network-side device as requested by the terminal.

Optionally, in this embodiment of this application, the apparatus 130 further includes a determining module. The receiving module 131 is further configured to receive a ninth message, where the ninth message is used to request to modify a data processing load of the terminal or the first network-side device to the third processing load. The determining module is configured to determine the second result based on the ninth message. The sending module 132 is further configured to send a tenth message.

Optionally, in this embodiment of this application, the receiving module 131 is specifically configured to receive the ninth message through an application data channel; or the receiving module 131 is specifically configured to receive the ninth message through a bootstrap data channel.

Optionally, in this embodiment of this application, the ninth message is a SIP message, and SDP information of the SIP message includes the third processing load; or the ninth message is an HTTP message, and the HTTP message includes the third processing load.

Optionally, in this embodiment of this application, the tenth message is a confirmation message, and the second result is the third processing load; or the tenth message includes the second result, and the second result is the third processing load or a fourth processing load determined by the second network-side device.

Optionally, in this embodiment of this application, the apparatus 130 further includes a determining module. The determining module is configured to determine the fourth processing load based on fourth status information of the first network-side device, where
the fourth status information includes at least one of the following: load information of the first network-side device, a quantity of terminals served by the first network-side device, usage of computing resources of the first network-side device, and memory usage of the first network-side device.

Optionally, in this embodiment of this application, the fourth processing load includes at least one of the following:
a ratio of data processing by the terminal or the first network-side device; and
task allocation for data processing by the terminal or the first network-side device.

According to the data processing apparatus provided in this embodiment of this application, establishment of a direct data channel or an indirect data channel may be determined based on the request of the terminal, thereby improving flexibility of establishing a data channel, ensuring stability of subsequent data processing, and further improving AR call efficiency.

The data processing apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The data processing apparatus provided in this embodiment of this application can implement each process implemented in the method embodiments in FIG. 2 to FIG. 7, with the same technical effect achieved. To avoid repetition, details are not described herein again.

Optionally, as shown in FIG. 14, an embodiment of this application further provides a communication device 1000, including a processor 1001 and a memory 1002. The memory 1002 stores a program or instructions capable of running on the processor 1001. For example, when the communication device 1000 is a terminal, and the program or instructions are executed by the processor 1001, the steps of the foregoing data processing method embodiment of the terminal are implemented, with the same technical effect achieved. When the communication device 1000 is a network-side device, and the program or instructions are executed by the processor 1001, the steps of the foregoing data processing method embodiment of the first network-side device or the second network-side device are implemented, with the same technical effect achieved. To avoid repetition, details are not described herein again.

An embodiment of this application further provides a terminal, including a processor and a communication interface. The communication interface is configured to receive first data through a first data channel, where the first data includes data processed by a first network-side device. The processor is configured to process the first data based on a first result to obtain final data, where the first result includes a processing load obtained after a first processing load is confirmed or modified by a second network-side device, and the first processing load is an amount of data processing load performed by the terminal or the first network-side device as requested by the terminal. The terminal embodiment corresponds to the foregoing terminal-side method embodiment, and each implementation process and implementation of the foregoing method embodiment can be applied to the terminal embodiment, with the same technical effect achieved.

An embodiment of this application further provides a terminal, including a processor and a communication interface. The communication interface is configured to send a seventh message and receive an eighth message, where the seventh message is used to request establishment of a second data channel, the seventh message carries fourth information, and the fourth information is used to request or indicate establishment of an indirect data channel or establishment of a data channel in which a network-side device participates. The processor is configured to establish the second data channel based on the eighth message. The terminal embodiment corresponds to the foregoing terminal-side method embodiment, and each implementation process and implementation of the foregoing method embodiment can be applied to the terminal embodiment, with the same technical effect achieved.

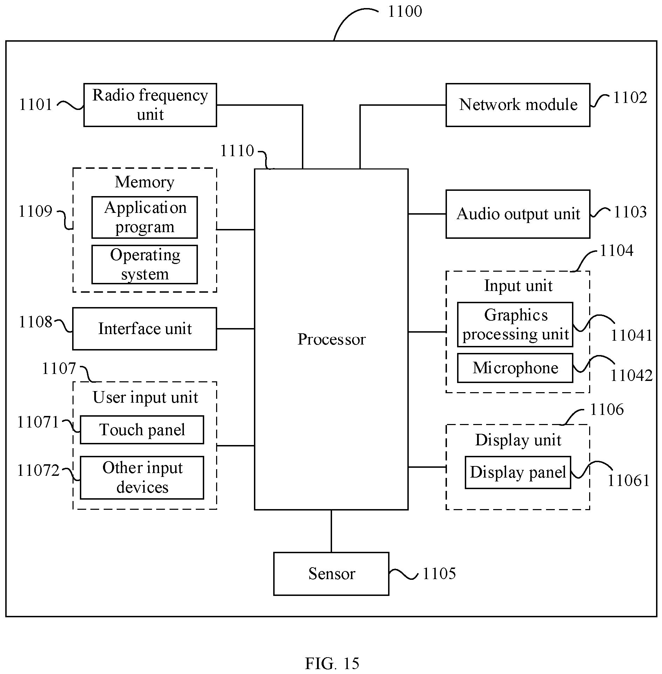

Specifically, FIG. 15 is a schematic diagram of a hardware structure of a terminal for implementing an embodiment of this application.

The terminal 1100 includes but is not limited to at least some components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art may understand that the terminal 1100 may further include a power supply (for example, a battery) supplying power to all components. The power supply may be logically connected to the processor 1110 through a power management system. In this way, functions such as charge management, discharge management, and power consumption management are implemented by using the power management system. The terminal structure shown in FIG. 15 does not constitute a limitation on the terminal. The terminal may include more or fewer components than those shown in the figure, or some components are combined, or component arrangements are different. Details are not described herein again.

It should be understood that, in this embodiment of this application, the input unit 1104 may include a graphics processing unit (Graphics Processing Unit, GPU) 11041 and a microphone 11042. The graphics processing unit 11041 processes image data of a still picture or video obtained by an image capture apparatus (such as a camera) in a video capture mode or an image capture mode. The display unit 1106 may include a display panel 11061, and the display panel 11061 may be configured in a form of a liquid crystal display, an organic light-emitting diode, or the like. The user input unit 1107 includes at least one of a touch panel 11071 and other input devices 11072. The touch panel 11071 is also referred to as a touchscreen. The touch panel 11071 may include two parts: a touch detection apparatus and a touch controller. The other input devices 11072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 1101 may transmit the downlink data to the processor 1110 for processing. In addition, the radio frequency unit 1101 may send uplink data to the network-side device. Usually, the radio frequency unit 1101 includes but is not limited to an antenna, an amplifier, a transceiver, a coupler, a low noise amplifier, a duplexer, and the like.

The memory 1109 may be configured to store software programs or instructions and various data. The memory 1109 may primarily include a first storage area for storing programs or instructions and a second storage area for storing data. The first storage area may store an operating system, an application program or instructions required by at least one function (such as an audio play function and an image play function), and the like. In addition, the memory 1109 may include a volatile memory or a non-volatile memory, or the memory 1109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 1109 in this embodiment of this application includes but is not limited to these and any other suitable types of memories.

The processor 1110 may include one or more processing units. Optionally, the processor 1110 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 1110.

The radio frequency unit 1101 is configured to receive first data through a first data channel, where the first data includes data processed by a first network-side device. The processor 1110 is configured to process the first data based on a first result to obtain final data. The first result includes a processing load obtained after a first processing load is confirmed or modified by a second network-side device, and the first processing load is an amount of data processing load performed by the terminal or the first network-side device as requested by the terminal.

Optionally, in this embodiment of this application, the radio frequency unit 1101 is further configured to send a first message, where the first message is used to request to modify a data processing load of the terminal or the first network-side device to the first processing load. The radio frequency unit 1101 is further configured to receive a second message. The processor 1110 is further configured to determine the first result based on the second message.

Optionally, in this embodiment of this application, the radio frequency unit 1101 is specifically configured to send the first message through the first data channel, where the first data channel is an application data channel; or the radio frequency unit 1101 is specifically configured to send the first message through a bootstrap data channel.

Optionally, in this embodiment of this application, the processor 1110 is further configured to determine the first processing load based on first status information of the terminal. The first status information includes at least one of the following: battery usage, network signal information, usage of computing resources, memory usage, and temperature information.

Optionally, in this embodiment of this application, the first data includes data obtained after the first network-side device renders data based on the first result. The processor 1110 is specifically configured to render the first data based on the first result to obtain the final data.

Optionally, in this embodiment of this application, the radio frequency unit 1101 is further configured to send a third message, where the third message carries first information, and the first information is used to request or indicate establishment of an indirect data channel or establishment of a data channel in which a network-side device participates. The radio frequency unit 1101 is further configured to receive a fourth message. The processor 1110 is configured to establish the first data channel based on the fourth message.

Optionally, in this embodiment of this application, the radio frequency unit 1101 is further configured to receive a fifth message, where the fifth message is used to request establishment of a data channel. The radio frequency unit 1101 is further configured to send a sixth message, where the sixth message carries second information, and the second information is used to request or indicate establishment of an indirect data channel or establishment of a data channel in which a network-side device participates. The processor 1110 is configured to establish the first data channel.

According to the terminal provided in this embodiment of this application, because the second network-side device may determine the processing load of the terminal and the processing load of the first network-side device based on the processing load requested by the terminal, the terminal may reprocess, based on the processing load, the data processed by the first network-side device, that is, the terminal and the first network-side device respectively process a part of the data, thereby avoiding a problem that the terminal needs a large amount of computation for processing the entire data alone or a problem that the network-side device needs to consume a large quantity of network resources for processing the entire data alone, and improving AR call efficiency of the terminal.

The radio frequency unit 1101 is configured to send a seventh message, where the seventh message is used to request establishment of a second data channel, the seventh message carries fourth information, and the fourth information is used to request or indicate establishment of an indirect data channel or establishment of a data channel in which a network-side device participates. The radio frequency unit 1101 is further configured to receive an eighth message. The processor 1110 is configured to establish the second data channel based on the eighth message.

Optionally, in this embodiment of this application, the seventh message is a SIP message, where SDP information of the SIP message carries the fourth information; or a message header of the SIP message carries the fourth information.

Optionally, in this embodiment of this application, the establishment of a data channel in which a network-side device participates includes: establishment of a data channel in which a first network-side device participates in rendering processing.

Optionally, in this embodiment of this application, the radio frequency unit 1101 is further configured to receive second data through the second data channel, where the second data includes data processed by a first network-side device; and the processor 1110 is configured to process the second data based on a second result to obtain final data; or
the radio frequency unit 1101 is further configured to send second data through the second data channel, where the second data includes data processed by the terminal, and the second data is used for processing by a first network-side device to obtain final data.

Optionally, in this embodiment of this application, the second result includes a processing load obtained after a third processing load is confirmed or modified by a second network-side device, and the third processing load is an amount of data processing load performed by the terminal or the first network-side device as requested by the terminal.

Optionally, in this embodiment of this application, the radio frequency unit 1101 is further configured to send a ninth message, where the ninth message is used to request to modify a data processing load of the terminal or the first network-side device to the third processing load. The radio frequency unit 1101 is further configured to receive a tenth message. The processor 1110 is configured to determine the second result based on the tenth message.

Optionally, in this embodiment of this application, the radio frequency unit 1101 is specifically configured to send the ninth message through the second data channel, where the second data channel is an application data channel; or the radio frequency unit 1101 is specifically configured to send the ninth message through a bootstrap data channel.

Optionally, in this embodiment of this application, the ninth message is a SIP message, and SDP information of the SIP message includes the third processing load; or the ninth message is an HTTP message, and the HTTP message includes the third processing load.

Optionally, in this embodiment of this application, the tenth message is a confirmation message, and the second result is the third processing load; or the tenth message includes the second result, and the second result is the third processing load or a fourth processing load determined by the second network-side device.

Optionally, in this embodiment of this application, the processor 1110 is further configured to determine the third processing load based on third status information of the terminal, where
the third status information includes at least one of the following: battery usage, network signal information, usage of computing resources, memory usage, temperature information, capability information, and terminal model information.

Optionally, in this embodiment of this application, the third processing load includes at least one of the following:
a ratio of data processing by the terminal or the first network-side device; and
task allocation for data processing by the terminal or the first network-side device.

Optionally, in this embodiment of this application, the second data includes data obtained after the first network-side device renders data based on the second result. The processor 1110 is specifically configured to render the second data based on the second result to obtain the final data.

Optionally, in this embodiment of this application, the second data includes data obtained after the terminal renders data based on the second result; and the second data is specifically used for rendering processing by the first network-side device to obtain.

According to the terminal provided in this embodiment of this application, the second network-side device may determine establishment of a direct data channel or an indirect data channel based on the request of the terminal, thereby improving flexibility of establishing a data channel, ensuring stability of subsequent data processing, and further improving AR call efficiency of the terminal.

An embodiment of this application further provides a network-side device, including a processor and a communication interface. The processor is configured to process data based on a first result to obtain first data. The communication interface is configured to send the first data to a terminal, where the first result includes a processing load obtained after a first processing load is confirmed or modified by a second network-side device, and the first processing load is an amount of data processing load performed by the terminal or a first network-side device as requested by the terminal. The network-side device embodiment corresponds to the foregoing method embodiment of the first network-side device, and each implementation process and implementation of the foregoing method embodiment can be applied to the network-side device embodiment, with the same technical effect achieved.

An embodiment of this application further provides a network-side device, including a processor and a communication interface. The communication interface is configured to send a first result to a terminal and a first network-side device, where the first result includes a processing load obtained after a first processing load is confirmed or modified by a second network-side device, and the first processing load is an amount of data processing load performed by the terminal or the first network-side device as requested by the terminal. The network-side device embodiment corresponds to the foregoing method embodiment of the second network-side device, and each implementation process and implementation of the foregoing method embodiment can be applied to the network-side device embodiment, with the same technical effect achieved.

An embodiment of this application further provides a network-side device, including a processor and a communication interface. The communication interface is configured to receive second data sent by a terminal, where the second data includes data processed by the terminal. The processor is configured to process the second data based on a second result to obtain final data, where the second result includes a processing load obtained after a third processing load is confirmed or modified by a second network-side device, and the third processing load is an amount of data processing load performed by the terminal or a first network-side device as requested by the terminal. The network-side device embodiment corresponds to the foregoing method embodiment of the first network-side device, and each implementation process and implementation of the foregoing method embodiment can be applied to the network-side device embodiment, with the same technical effect achieved.

An embodiment of this application further provides a network-side device, including a processor and a communication interface. The communication interface is configured to receive a seventh message sent by a terminal and send an eighth message to the terminal, where the seventh message is used to request establishment of a second data channel, the seventh message carries fourth information, and the fourth information is used to request or indicate establishment of an indirect data channel or establishment of a data channel in which a network-side device participates. The processor is configured to establish the second data channel. The network-side device embodiment corresponds to the foregoing method embodiment of the second network-side device, and each implementation process and implementation of the foregoing method embodiment can be applied to the network-side device embodiment, with the same technical effect achieved.

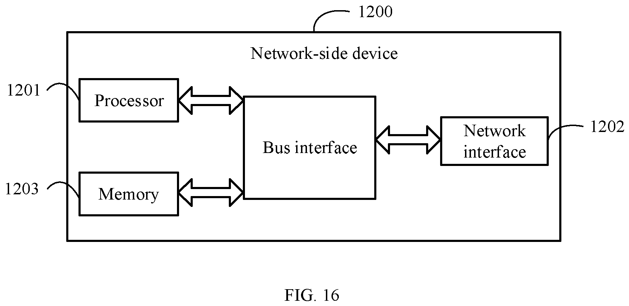

Specifically, an embodiment of this application further provides a network-side device. As shown in FIG. 16, the network-side device 1200 includes a processor 1201, a network interface 1202, and a memory 1203. The network interface 1202 is, for example, a common public radio interface (common public radio interface, CPRI).

Specifically, the network-side device 1200 in this embodiment of the present invention further includes a program or instructions stored in the memory 1203 and capable of running on the processor 1201. When the processor 1201 invokes the program or instructions in the memory 1203, the method performed by each module shown in FIG. 9, FIG. 10, FIG. 12, or FIG. 13 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing data processing method embodiment is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing data processing method embodiment, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing data processing method embodiment, with the same technical effect achieved. To avoid repetition, details are not described herein again.

An embodiment of this application further provides a communication system, including a terminal and a network-side device. The terminal may be configured to perform the steps of the foregoing data processing method. The network-side device may be configured to perform the steps of the foregoing data processing method.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A data processing method, comprising:
receiving, by a terminal, first data through a first data channel, wherein the first data comprises data processed by a first network-side device; and
processing, by the terminal, the first data based on a first result to obtain final data, wherein
the first result comprises a processing load obtained after a first processing load is confirmed or modified by a second network-side device, and the first processing load is an amount of data processing load performed by the terminal or the first network-side device as requested by the terminal.

2. The method according to claim 1, wherein the method further comprises:
sending, by the terminal, a first message, wherein the first message is used to request to modify a data processing load of the terminal or the first network-side device to the first processing load;
receiving, by the terminal, a second message; and
determining, by the terminal, the first result based on the second message.

3. The method according to claim 2, wherein the sending, by the terminal, a first message comprises:
sending, by the terminal, the first message through the first data channel, wherein the first data channel is an application data channel; or
sending, by the terminal, the first message through a bootstrap data channel.

4. The method according to claim 2 or 3, wherein
the first message is a session initiation protocol SIP message, and session description protocol SDP information of the SIP message comprises the first processing load; or
the first message is a hypertext transfer protocol HTTP message, and the HTTP message comprises the first processing load.

5. The method according to claim 2, wherein the second message is a confirmation message, and the first result is the first processing load; or
the second message comprises the first result, and the first result is the first processing load or a second processing load determined by the second network-side device.

6. The method according to claim 1, wherein the method further comprises:
determining, by the terminal, the first processing load based on first status information of the terminal, wherein
the first status information comprises at least one of the following: battery usage, network signal information, usage of computing resources, memory usage, temperature information, capability information, and terminal model information.

7. The method according to claim 1 or 6, wherein the first processing load comprises at least one of the following:
a ratio of data processing by the terminal or the first network-side device; and
task allocation for data processing by the terminal or the first network-side device.

8. The method according to claim 1, wherein the first data comprises data obtained after the first network-side device renders data based on the first result; and
the processing, by the terminal, the first data based on a first result to obtain final data comprises:
rendering, by the terminal, the first data based on the first result to obtain the final data.

9. The method according to claim 1, wherein the method further comprises:
sending, by the terminal, a third message, wherein the third message carries first information, and the first information is used to request or indicate establishment of an indirect data channel or establishment of a data channel in which a network-side device participates;
receiving, by the terminal, a fourth message; and
establishing, by the terminal, the first data channel based on the fourth message.

10. The method according to claim 9, wherein the third message is a SIP message, wherein
SDP information of the SIP message carries the first information; or
a message header of the SIP message carries the first information.

11. The method according to claim 1, wherein the method further comprises:
receiving, by the terminal, a fifth message, wherein the fifth message is used to request establishment of a data channel;
sending, by the terminal, a sixth message, wherein the sixth message carries second information, and the second information is used to request or indicate establishment of an indirect data channel or establishment of a data channel in which a network-side device participates; and
establishing, by the terminal, the first data channel.

12. The method according to claim 11, wherein the fifth message carries third information, and the third information is used to request or indicate establishment of a direct data channel or establishment of a data channel in which a network-side device does not participate.

13. A data processing method, comprising:
processing, by a first network-side device, data based on a first result to obtain first data; and
sending, by the first network-side device, the first data to a terminal, wherein
the first result comprises a processing load obtained after a first processing load is confirmed or modified by a second network-side device, and the first processing load is an amount of data processing load performed by the terminal or the first network-side device as requested by the terminal.

14. The method according to claim 13, wherein the processing, by a first network-side device, data based on a first result to obtain first data comprises:
rendering, by the first network-side device, the data based on the first result to obtain the first data.

15. A data processing method, comprising:
sending, by a second network-side device, a first result to a terminal and a first network-side device, wherein
the first result comprises a processing load obtained after a first processing load is confirmed or modified by the second network-side device, and the first processing load is an amount of data processing load performed by the terminal or the first network-side device as requested by the terminal.

16. The method according to claim 15, wherein the method further comprises:
receiving, by the second network-side device, a first message, wherein the first message is used to request to modify a data processing load of the terminal or the first network-side device to the first processing load;
determining, by the second network-side device, the first result based on the first message; and
sending, by the second network-side device, a second message.

17. The method according to claim 16, wherein the receiving, by the second network-side device, a first message comprises:
receiving, by the second network-side device, the first message through an application data channel; or
receiving, by the second network-side device, the first message through a bootstrap data channel.

18. The method according to claim 16 or 17, wherein
the first message is a SIP message, and SDP information of the SIP message comprises the first processing load; or
the first message is an HTTP message, and the HTTP message comprises the first processing load.

19. The method according to claim 16, wherein the second message is a confirmation message, and the first result is the first processing load; or
the second message comprises the first result, and the first result is the first processing load or a second processing load determined by the second network-side device.

20. The method according to claim 19, wherein the method further comprises:
determining, by the second network-side device, the second processing load based on second status information of the first network-side device, wherein
the second status information comprises at least one of the following: load information of the first network-side device, a quantity of terminals served by the first network-side device, usage of computing resources of the first network-side device, and memory usage of the first network-side device.

21. The method according to claim 19 or 20, wherein the second processing load comprises at least one of the following:
a ratio of data processing by the terminal or the first network-side device; and
task allocation for data processing by the terminal or the first network-side device.

22. The method according to claim 15, wherein the first result is data obtained after the first network-side device renders data based on the first result.

23. The method according to claim 15, wherein the method further comprises:
receiving, by the second network-side device, a third message, wherein the third message carries first information, and the first information is used to request or indicate establishment of an indirect data channel or establishment of a data channel in which a network-side device participates; and
sending, by the second network-side device, a fourth message.

24. The method according to claim 22, wherein the third message is a SIP message, wherein
SDP information of the SIP message carries the first information; or
a message header of the SIP message carries the first information.

25. The method according to claim 15, wherein the method further comprises:
sending, by the second network-side device, a fifth message, wherein the fifth message is used to request establishment of a data channel; and
receiving, by the second network-side device, a sixth message, wherein the sixth message carries second information, and the second information is used to request or indicate establishment of an indirect data channel or establishment of a data channel in which a network-side device participates.

26. The method according to claim 25, wherein the fifth message carries third information, and the third information is used to request or indicate establishment of a direct data channel or establishment of a data channel in which a network-side device does not participate.

27. A data processing method, comprising:
sending, by a terminal, a seventh message, wherein the seventh message is used to request establishment of a second data channel, wherein
the seventh message carries fourth information, and the fourth information is used to request or indicate establishment of an indirect data channel or establishment of a data channel in which a network-side device participates;
receiving, by the terminal, an eighth message; and
establishing, by the terminal, the second data channel based on the eighth message.

28. The method according to claim 27, wherein the seventh message is a SIP message, wherein
SDP information of the SIP message carries the fourth information; or
a message header of the SIP message carries the fourth information.

29. The method according to claim 27, wherein the establishment of a data channel in which a network-side device participates comprises:
establishment of a data channel in which a first network-side device participates in rendering processing.

30. The method according to claim 27, wherein the method further comprises:
receiving, by the terminal, second data through the second data channel, wherein the second data comprises data processed by a first network-side device; and
processing, by the terminal, the second data based on a second result to obtain final data;
or
sending, by the terminal, second data through the second data channel, wherein the second data comprises data processed by the terminal, and the second data is used for processing by a first network-side device to obtain final data.

31. The method according to claim 30, wherein the second result comprises a processing load obtained after a third processing load is confirmed or modified by a second network-side device, and the third processing load is an amount of data processing load performed by the terminal or the first network-side device as requested by the terminal.

32. The method according to claim 31, wherein the method further comprises:
sending, by the terminal, a ninth message, wherein the ninth message is used to request to modify a data processing load of the terminal or the first network-side device to the third processing load;
receiving, by the terminal, a tenth message; and
determining, by the terminal, the second result based on the tenth message.

33. The method according to claim 32, wherein the sending, by the terminal, a ninth message comprises:
sending, by the terminal, the ninth message through the second data channel, wherein the second data channel is an application data channel; or
sending, by the terminal, the ninth message through a bootstrap data channel.

34. The method according to claim 32 or 33, wherein
the ninth message is a SIP message, and SDP information of the SIP message comprises the third processing load; or
the ninth message is an HTTP message, and the HTTP message comprises the third processing load.

35. The method according to claim 32, wherein the tenth message is a confirmation message, and the second result is the third processing load; or
the tenth message comprises the second result, and the second result is the third processing load or a fourth processing load determined by the second network-side device.

36. The method according to claim 31, wherein the method further comprises:
determining, by the terminal, the third processing load based on third status information of the terminal, wherein
the third status information comprises at least one of the following: battery usage, network signal information, usage of computing resources, memory usage, temperature information, capability information, and terminal model information.

37. The method according to claim 31 or 36, wherein the third processing load comprises at least one of the following:
a ratio of data processing by the terminal or the first network-side device; and
task allocation for data processing by the terminal or the first network-side device.

38. The method according to claim 30, wherein the second data comprises data obtained after the first network-side device renders data based on the second result; and
the processing, by the terminal, the second data based on a second result to obtain final data comprises:
rendering, by the terminal, the second data based on the second result to obtain the final data.

39. The method according to claim 30, wherein the second data comprises data obtained after the terminal renders data based on the second result; and
the second data is specifically used for rendering processing by the first network-side device to obtain the final data.

40. A data processing method, comprising:
receiving, by a first network-side device, second data sent by a terminal, wherein the second data comprises data processed by the terminal; and
processing, by the first network-side device, the second data based on a second result to obtain final data, wherein
the second result comprises a processing load obtained after a third processing load is confirmed or modified by a second network-side device, and the third processing load is an amount of data processing load performed by the terminal or the first network-side device as requested by the terminal.

41. The method according to claim 40, wherein the processing, by the first network-side device, the second data based on a second result to obtain final data comprises:
rendering, by the first network-side device, the second data based on the second result to obtain the final data.

42. A data processing method, comprising:
receiving, by a second network-side device, a seventh message sent by a terminal, wherein the seventh message is used to request establishment of a second data channel, wherein
the seventh message carries fourth information, and the fourth information is used to request or indicate establishment of an indirect data channel or establishment of a data channel in which a network-side device participates; and
sending, by the second network-side device, an eighth message to the terminal, and establishing the second data channel.

43. The method according to claim 42, wherein the seventh message is a SIP message, wherein
SDP information of the SIP message carries the fourth information; or
a message header of the SIP message carries the fourth information.

44. The method according to claim 42, wherein the establishment of a data channel in which a network-side device participates comprises:
establishment of a data channel in which a first network-side device participates in rendering processing.

45. The method according to claim 42, wherein the method further comprises:
sending, by the second network-side device, a second result to the terminal and a first network-side device, wherein
the second result comprises a processing load obtained after a third processing load is confirmed or modified by the second network-side device, and the third processing load is an amount of data processing load performed by the terminal or the first network-side device as requested by the terminal.

46. The method according to claim 45, wherein the method further comprises:
receiving, by the second network-side device, a ninth message, wherein the ninth message is used to request to modify a data processing load of the terminal or the first network-side device to the third processing load;
determining, by the second network-side device, the second result based on the ninth message; and
sending, by the second network-side device, a tenth message.

47. The method according to claim 46, wherein the receiving, by the second network-side device, a ninth message comprises:
receiving, by the second network-side device, the ninth message through an application data channel; or
receiving, by the second network-side device, the ninth message through a bootstrap data channel.

48. The method according to claim 46 or 47, wherein
the ninth message is a SIP message, and SDP information of the SIP message comprises the third processing load; or
the ninth message is an HTTP message, and the HTTP message comprises the third processing load.

49. The method according to claim 46, wherein the tenth message is a confirmation message, and the second result is the third processing load; or
the tenth message comprises the second result, and the second result is the third processing load or a fourth processing load determined by the second network-side device.

50. The method according to claim 49, wherein the method further comprises:
determining, by the second network-side device, the fourth processing load based on fourth status information of the first network-side device, wherein
the fourth status information comprises at least one of the following: load information of the first network-side device, a quantity of terminals served by the first network-side device, usage of computing resources of the first network-side device, and memory usage of the first network-side device.

51. The method according to claim 49 or 50, wherein the fourth processing load comprises at least one of the following:
a ratio of data processing by the terminal or the first network-side device; and
task allocation for data processing by the terminal or the first network-side device.

52. A data processing apparatus, wherein the apparatus comprises a receiving module and a processing module, wherein
the receiving module is configured to receive first data through a first data channel, wherein the first data comprises data processed by a first network-side device; and
the processing module is configured to process the first data based on a first result to obtain final data, wherein
the first result comprises a processing load obtained after a first processing load is confirmed or modified by a second network-side device, and the first processing load is an amount of data processing load performed by a terminal or the first network-side device as requested by the terminal.

53. A data processing apparatus, wherein the apparatus comprises a processing module and a sending module,
wherein
the processing module is configured to process data based on a first result to obtain first data; and
the sending module is configured to send the first data to a terminal, wherein
the first result comprises a processing load obtained after a first processing load is confirmed or modified by a second network-side device, and the first processing load is an amount of data processing load performed by the terminal or a first network-side device as requested by the terminal.

54. A data processing apparatus, wherein the apparatus comprises a sending module, wherein
the sending module is configured to send a first result to a terminal and a first network-side device, wherein
the first result comprises a processing load obtained after a first processing load is confirmed or modified by a second network-side device, and the first processing load is an amount of data processing load performed by the terminal or the first network-side device as requested by the terminal.

55. A data processing apparatus, wherein the apparatus comprises a sending module, a receiving module, and an establishment module, wherein
the sending module is configured to send a seventh message, wherein the seventh message is used to request establishment of a second data channel, wherein
the seventh message carries fourth information, and the fourth information is used to request or indicate establishment of an indirect data channel or establishment of a data channel in which a network-side device participates;
the receiving module is configured to receive an eighth message; and
the establishment module is configured to establish the second data channel based on the eighth message.

56. A data processing apparatus, wherein the apparatus comprises a receiving module and a processing module, wherein
the receiving module is configured to receive second data sent by a terminal, wherein the second data comprises data processed by the terminal; and
the processing module is configured to process the second data based on a second result to obtain final data, wherein
the second result comprises a processing load obtained after a third processing load is confirmed or modified by a second network-side device, and the third processing load is an amount of data processing load performed by the terminal or a first network-side device as requested by the terminal.

57. A data processing apparatus, wherein the apparatus comprises a receiving module, a sending module, and an establishment module, wherein
the receiving module is configured to receive a seventh message sent by a terminal, wherein the seventh message is used to request establishment of a second data channel, wherein
the seventh message carries fourth information, and the fourth information is used to request or indicate establishment of an indirect data channel or establishment of a data channel in which a network-side device participates;
the sending module is configured to send an eighth message to the terminal; and
the establishment module is configured to establish the second data channel.

58. A terminal, comprising a processor and a memory, wherein the memory stores a program or instructions capable of running on the processor, and when the program or instructions are executed by the processor, the steps of the data processing method according to any one of claims 1 to 12 are implemented, or the steps of the data processing method according to any one of claims 27 to 39 are implemented.

59. A network-side device, wherein the network-side device is a first network-side device and comprises a processor and a memory, wherein the memory stores a program or instructions capable of running on the processor, and when the program or instructions are executed by the processor, the steps of the data processing method according to claim 13 or 14 are implemented, or the steps of the data processing method according to claim 40 or 41 are implemented.

60. A network-side device, wherein the network-side device is a second network-side device and comprises a processor and a memory, wherein the memory stores a program or instructions capable of running on the processor, and when the program or instructions are executed by the processor, the steps of the data processing method according to any one of claims 15 to 26 are implemented, or the steps of the data processing method according to any one of claims 42 to 51 are implemented.

61. A readable storage medium, wherein the readable storage medium stores a program or instructions, and when the program or instructions are executed by a processor, the steps of the data processing method according to any one of claims 1 to 12 are implemented, or the steps of the data processing method according to claim 13 or 14 are implemented, the steps of the data processing method according to any one of claims 15 to 26 are implemented, or the steps of the data processing method according to any one of claims 27 to 39 are implemented, or the steps of the data processing method according to claim 40 or 41 are implemented, or the steps of the data processing method according to any one of claims 42 to 51 are implemented.
